Europäisches Patentamt

European Patent Office

Office européen des brevets

(11) Veröffentlichungsnummer: **0 334 850**
**B1**

(12) **EUROPÄISCHE PATENTSCHRIFT**

(45) Veröffentlichungstag der Patentschrift: **22.08.90**

(21) Anmeldenummer: **87907087.8**

(22) Anmeldetag: **03.11.87**

(88) Internationale Anmeldenummer:
**PCT/AT87/00063**

(87) Internationale Veröffentlichungsnummer:
**WO 88/03630 19.05.88 Gazette 88/11**

(51) Int. Cl.⁵: **F 16 L 59/12, B 65 D 90/06**

(54) **ISOLIERUNG FÜR SPEICHER.**

(30) Priorität: **04.11.86 AT 2938/86**
**05.03.87 AT 511/87**

(43) Veröffentlichungstag der Anmeldung:
**04.10.89 Patentblatt 89/40**

(45) Bekanntmachung des Hinweises auf die
Patenterteilung:
**22.08.90 Patentblatt 90/34**

(84) Benannte Vertragsstaaten:
**AT BE CH DE FR GB IT LI LU NL SE**

(56) Entgegenhaltungen:
**EP-A-0 117 388**
**CH-A- 487 780**
**DE-A-3 345 964**
**US-A-2 955 686**
**US-A-4 163 347**

(73) Patentinhaber: **SCHAUMSTOFFWERK GREINER
GESELLSCHAFT M.B.H.
Krift 5
A-4550 Kremsmünster (AT)**

(72) Erfinder: **WEINGARTNER, Rudolf
Grundstra e 22
A-4501 Neuhofen an der Krems (AT)**

(74) Vertreter: **Wolke, Heidemarie, Dr.
Stadtplatz 7
A-4400 Steyr (AT)**

Courier Press, Leamington Spa, England.

## Beschreibung

Die Erfindung betrifft eine Isolierung für Speicherbehälter wie sie im Oberbegriff des Patentanspruches 1 beschrieben ist.

Ein bekannter Speicherbehälter mit einer Isolierung — gemäß EP—A—117 338 — besteht aus vorgeformten plattenförmigen Isolierkörpern aus Hartschaumkunststoff. Sie sind bereichsweise an diesen anliegend herumgelegt, und über profilierte Teile miteinander verbunden. Diese profilierten Teile weisen im Grundriß ein kreisbogenförmiges Profil auf, wobei jede Platte an der einen Seitenkante mit einer Nut und an der gegenüberliegenden Seitenkante mit einem Verbindungsansatz versehen ist. Der Verbindungsansatz und die Nut passen formgleich ineinander. Da eine Bogenlänge des Verbindungsansatzes in Draufsicht größer ist als eine Bogenlänge der Nut, können einander benachbarte Platten in unterschiedliche Winkelstellungen zueinander verstellt werden. Durch diese Ausbildung der bekannten Isolierung war es einfach möglich derartige Speicherbehälter mit einem im wesentlichen fugenfreien Isoliermantel zu umgeben.

Um eine ausreichende Befestigung der Isolierung bzw. eine Ableitung der Windkräfte zu erreichen wurden außerhalb der Deckschicht umlaufende Spannbänder angeordnet, wie diese beispielsweise aus der US—A—163 347 bekannt sind. Diese außerhalb der Isolation angeordneten Spannbänder erforderten jedoch zusätzlichen Material und beträchtlichen Arbeitsaufwand für die Montage.

Bei einer weiteren bekannten Ausbildung einer Isolierung gemäß CH—A—487 480 — wird davon ausgegangen, daß eine Deckschicht verwendet wird, die eine derart hohe Widerstandsfestigkeit aufweist, daß die Sog- und Druckkräfte durch im Bereich der Stoßstellen der Platten sich einander überlappende Teile der Deckschichten, in welchen Verbindungsglieder angeordnet sind, aufgenommen werden können. Dies erfordert eine entsprechend massive Ausbildung der Deckschicht und führt dazu, daß das Gewicht einer derartigen Isolierung sehr hoch wird. Es sind damit massive Stützkonstruktionen vor allem bei höheren Speicherbehältern notwendig um das Gewicht der Isolierung aufnehmen zu können. Dazu kommt, daß die mit derartigen Deckschichten versehenen Platten jeweils nur für Speicherbehälter mit etwa gleichen Durchmesser oder für rechteckige Speicherbehälter eingesetzt werden können da bereits bei, geringer winkeliger Lage der einander benachbarten Platten die Wellungen der Deckschicht der einander benachbarten Platten nicht mehr deckungsgleich einander liegen würden, sondern vielmehr gegeneinander verkantet wären. Dies würde aber dazu führen, daß bei dem Verbinden benachbarter Platten über Verbindungsglieder eine in Richtung einer Abhebung der Platten vom Speicherbehälter wirkende Kraft auftreten würde, bzw. die Verbindungsglieder auf Abscherung beansprucht würden. Wollte man dies vermeiden, müßten die Enden der Deckschichten der einander benachbarten Platten unmittelbar vor der Montage in einem dem jeweiligen Durchmesser des zu verkleidenden Speicherbehälters angepaßten Ausmaß senkrecht zur Plattenfläche abgekantet werden um ein deckungsgleiches Ineinanderliegen der einander überlappenden Teile der Deckschichten zu ermöglichen.

Der Erfindung liegt die Aufgabe zugrunde, eine Isolierung zu schaffen, die im Stande ist neben einer guten thermischen Isolierung auch den hohen Sogkräften zufolge Winddruck bei im Freien aufgestellten Großspeichern zuverlässig standzuhalten.

Diese Aufgabe wird durch die im Kennzeichenteil des Patentanspruches 1 angeführten Merkmale gelöst. Durch die Zuordnung von Verbindungs- und/oder Verstärkungsgliedern im Bereich der Seitenkanten wird beim Zusammenfügen der Platten zu einer Isolierung ein in der Isolierung befindliches Verstärkungsgerippe geschaffen. Eine mit einem derartigen Verstärkungsgerippe versehene Isolierung kann den äußeren Einflüssen einen wesentlich höheren Widerstand entgegensetzen, sodaß auch bei hohen Windgeschwindigkeiten und den dabei enstehenden Sogkräften eine derart ausgebildete Isolierung eingesetzt werden kann. Vor allem durch die Verstärkung der Platten im Bereich ihrer Seitenkanten wird gleichzeitig ein dichter Abschluß der Isolierung gegen von außen eindringende Feuchtigkeit erreicht, sodaß die thermische Isolationswirkung der Isolierung über lange Zeit beibehalten werden kann. Dazu kommt, daß durch die in der Platte integrierten Verstärkungen die Platten beim Transport und beim Handling auf der Baustelle widerstandsfähiger sind und der durch Bruch von Platten entstehende Ausschuß kleingehalten werden kann.

Es ist weiters auch eine Ausbildung nach Patentanspruch 2 möglich. Dadurch werden keine exzentrischen Zugkräfte auf die Platten aufgebracht.

Eine weitere Ausführungsform ist im Patentanspruch 3 beschrieben. Durch die Verwendung von den Verbindungs- und/oder Verstärkungsgliedern zugeordneten Spannvorrichtungen, insbesondere den Längs- und/oder Querspanngliedern werden die auf die Isolierung einwirkenden Belastungen immer auf mehrere Platten aufgeteilt, wodurch im Verband einer Isolierung die zur Verstärkung benötigten Teile schwächer dimensioniert werden können als wenn jede einzelne Platte die volle Belastung übernehmen müßte.

Vorteilhaft ist aber auch eine Ausführung gemäß Patentanspruch 4, da dadurch innige Krafteinleitung in das Innere der Platten erfolgt.

Es ist aber auch eine Ausbildung nach Patentanspruch 5 möglich, wodurch eine gute Aufteilung der auf der Angriffseite des Windes auftretenden Zugkräfte und der auf der vom Wind abgekehrten Seite auftretende Sogkräfte erzielt wird.

Von Vorteil ist aber auch eine Weiterbildung nach Patentanspruch 6, dadadurch die Platten auch in ihren Bereichen zwischen den Querspanngliedern in einer exakten Lage zum Speicherbehälter abgestützt werden können.

Es ist aber auch eine Ausbildung gemäß Patentanspruch 7 moglich, wodurch zu den in den Platten integrierten Verbindungs- und/oder Verstärkungsgliedern gebildeten Verstärkungsgerippe ein weiteres Stütznetz durch die Längs- und Querspannglieder geschaffen wird, sodaß sich die auf die Platten einwirkenden Kräfte gleichmäßig aufteilen können.

Eine weitere Ausführungsvariante ist im Patentanspruch 8 beschrieben. Durch diese Ausbildung ist eine rasche Verbindung der einander benachbart angeordneten Platten möglich. Zusätzlich wird durch die jeder Platte zugeordneten Quer- und/oder Längsspannglieder eine einfache Handhabung derselben erreicht, wobei durch die Verwendung von Kupplungsgliedern an den voneinander abgewendeten Enden der Quer- und/oder Längsspannglieder eine gute Kraftübertragung auf die benachbarten Platten sichergestellt wird.

Vorteilhaft ist aber auch eine Ausführungsform nach Patentanspruch 9, da dadurch mit einem einzigen Querspannglied über den Umfang des Speicherbehälters das Auslangen gefunden werden kann und das Gewicht von einer Vielzahl von über den Umfang des Speicherbehälters verteilten Kupplungsvorrichtungen eingespart werden kann.

Eine andere vorteilhafte Ausgestaltung ist im Patentanspruch 10 beschrieben, sodaß die einander zugeordneten Kupplungteile der Kupplungsvorrichtung nur ineinander eingehängt werden müssen und nach Fertigstellung der Isolierung trotzdem ein dem gesamten Umfang des Speicherbehälters umgreifender Haltekranz geschaffen wird.

Es ist aber auch eine Ausbildung nach Patentanspruch 11 möglich. Dadurch können die benachbarten Querspannglieder jeweils im Mittelbereich einer zwischen ihnen angeordneten Platte befestigt werden. Bei "voll auf Fug" verlegten Platten wird dadurch überdies die Möglichkeit eröffnet, nichtnur in den Endbereichen sondern auch in der Längsmitte der Platten ein Querspannglied vorzusehen.

Es ist aber auch eine Ausführungsform nach Patentanspruch 12 möglich, wodurch die zum Befestigen der Platten benötigten Querspannglieder fest mit denselben verbunden sind und Verluste von diesen Teilen auf der Baustelle bzw. eine Uberwachung und Lagerung von zusätzlichen Bauteilen nicht notwendig ist.

Vorteilhaft ist eine Ausführung nach Patentanspruch 13, da dadurch in die einzelnen Platten wesentlich höhere Kräfte eingeleitet werden können, als wenn nur das jeweilige Querspannglied durch das Innere der Platten verlaufen würde. Durch diese größere Oberfläche an welcher der Kunststoffschaum der Platten anhaften kann, wird auch eine höhere Ausreißfestigkeit und damit auch eine höhere Beanspruchbarkeit der Platten erzielt.

Vorteilhaft ist eine Weiterbildung nach Patentanspruch 14. Dadurch können Aussparungen in den einzelnen Platten und somit Zonen mit verringertem Querschnitt vermieden werden. Überdies können die Platten gegenüber einer Ausführungsform nach welcher Aussparungen in den Platten vorgesehen sind mit einer geringeren Wandstärke ausgebildet werden.

Die Isolierung kann aber auch nach Patentanspruch 15 weitergebildet werden, wodurch die Quer- bzw. Längsspannglieder jederzeit nachträglich mit derartigen Querspanngliedern verbunden werden können.

Ein anderes Lösungsmerkmal ist im Patentanspruch 16 beschrieben, wodurch unterschiedliche auf den Speicherbehälter von außen einwirkende Temperaturen die Funktionstüchtigkeit der Querspannglieder nicht nachteilig beeinflussen können.

Vorteilhaft ist aber auch eine Weiterbildung nach Patentanspruch 17, da dadurch jeweils in halber Höhe derselben ein Haltering integriert werden kann. Durch dieses in die Platten integrierte Verstärkungsgerippe und daß durch die Quer- bzw. Längsspannglieder gebildete Verstärkungsnetz kann auch der zur Haltung des Traggerüstes für diese Platten notwendige Aufwand vermindert werden.

Es ist aber auch eine Ausführung nach Patentanspruch 18 moglich, wodurch nachträglich jederzeit ein Quer- bzw. Längsspannglied mit den Platten verbunden werden kann.

Eine andere Ausführungsform ist im Patentanspruch 19 beschrieben, wodurch eine rasche und rutschfeste Verspannung erzielt werden kann.

Vorteilhaft ist aber auch eine Weiterbildung nach Patentanspruch 20, da durch die entsprechende Ausbildung der Querspannglieder keine zusätzlichen Organe benötigt werden um diese mit den Verstärkungsgliedern in den Platten zu verbinden.

Weiters ist auch eine Weiterbildung nach Patentanspruch 21 möglich. Durch die Schritt für Schritt erfolgende Spannung der Querspannglieder wird bereits während dem Aufbau der Isolierung eine Versteifung der einzelnen Platten untereinander erreicht, wodurch deren Zusammenbau erleichtert wird. Darüber hinaus können beim Spannen des Spanngliedes aufgrund von großen Spannwegen eventuell auftretende Verlagerungen der Platten während des Spannens verhindert werden.

Eine andere Ausführungsform ist im Patentanspruch 22 geoffenbart, wodurch eine einfache Verbindung der einzelnen Platten erreicht wird.

Eine andere vorteilhaften Ausgestaltung der Isolierung ist im Patentanspruch 23 beschrieben. Durch diese Ausbildung ist es möglich mit einer standardmäßig ausgebildeten Platte Speicherbehälter mit unterschiedlichen Durchmessern zu erkleiden, wobei aufgrund der durchgehenden innigen Verbindung im Bereich der Federn und Nuten eine hohe Belastbarkeit mit Sog- und Druckkräften erzielt wird. Gleichzeitig wird trotz der Möglichkeit der Anpassung der Platten an unterschiedliche Außendurchmesser eine dichte Verbindung zwischen den einzelnen Platten erreicht.

Weiters ist auch eine Ausbildung nach Patentanspruch 24 möglich. Jede Platte stützt sich somit an zwei in Umfangsrichtung des Behälters voneinander distanzierten Bereichen auf der Wand des Speicherbehälters ab und es können derart für die Isolierung schädliche Schwingugen leichter gedämpft werden können.

Vorteilhaft ist aber auch eine Ausbildung nach Patentanspruch 25, da dadurch das Eindringen von Feuchtigkeit auch bei hohen Winddrücken durch Fugen oder Spalten zuverlässig verhindert wird.

Eine weitere Ausbildung der Isolierung ist im Patentanspruch 26 vorgesehen, wodurch das Entstehen von Feuchtigkeit und eine Kondenswasserbildung zwischen der Außenseite des Speicherbehälters und der Innenseite der Isolierung zuverlässig verhindert wird.

Vorteilhaft ist aber auch eine Ausführung nach Patentanspruch 27, da neben der exakten Verbindung der einzelnen Platten durch die Verwendung vorgefertigter Profile auch eine erhebliche Versteifung der Platten im Bereich der Seitenkanten erzielt wird, die sich sowohl beim Transport und bei der Montage als auch im Verband der Isolierung durch eine höhere Widerstandskraft gegen Verformungen bei Sog- und Druckkräften auszeichnet.

Von Vorteil istweiters auch eine Ausbildung nach Patentanspruch 28, da dadurch eine innige Verbindung zwischen den Profilen und dem Schaumkunststoffkörper der Platten erreicht wird.

Weiters ist auch eine Ausbildung nach Patentanspruch 29. Dadurch werden die Platten im Bereich ihrer Längsmitte verstärkt.

Eine andere Ausführungsvariante der Isolierung ist im Patentanspruch 30 beschrieben, wodurch ein relativ günstiger Verstellbereich und damit eine einfache Anpassung an unterschiedliche Durchmesser der Speicherbehälter erzielt wird.

Vorteilhaft ist auch eine Weiterbildung nach Patentanspruch 31, da durch die teleskopartige Führung ein dichter Abschluß zwischen den Profilteilen hergestellt wird.

Eine andere Weiterbildung der Isolierung ist nach Patentanspruch 32 vorgesehen. Dadurch wird sowohl von der Innen- als auch von der Außenseite her ein dichter Abschluß zwischen den einzelnen Platten erzielt.

Eine andere Ausführungsvariante ist nach Patentanspruch 33 vorgesehen, wodurch das Verbinden nebeneinander angeordneter Platten durch ein Inneinanderschieben in Umfangsrichtung ohne ein Einfädeln parallel zur Längsachse des Speicherbehälters möglich ist.

Es ist aber auch eine Ausführung nach Patentanspruch 35 bei der die Verstärkungsglieder zweier einander unmittelbar benachbarter Platten mit einem beide durchsetzenden Verbindungselement verbunden werden können.

Eine andere Ausführungsvariante der Isolierung ist im Patentanspruch 36 beschrieben. Die Verstärkungsglieder bilden gleichzeitig einen Schutz gegen Beschädigungen der Seitenkanten der Platten während des Transportes und der Montage.

Schließlich umfaßt die Erfindung auch ein Verfahren zur Montage einer Isolierung.

Dieses Verfahren ist durch die im Patentanspruch 39 angeführten Maßnahmen gekennzeichnet. Durch das abschnittweise Zusammensetzen der Isolierung und der in dieser angeordneten Spannglieder wird auch eine in mehreren Abschnitten voneinander unabhängig verlaufende Montage der Isolierung ermöglicht. Darüber hinaus wird durch die unmittelbar nach dem Zusammenfügen erfolgte Spannung der Querspannglieder eine Verfestigung der bereits montierten Teile der Isolierung erreicht, die die Montage der nachfolgenden Platten erleichtert.

Weitere vorteilhafte Ausführungsformen sind in den Patentansprüchen 34, 37 und 38 beschrieben.

Zum besseren Verständnis der Erfindung wird diese im folgenden anhand mehrerer in den Zeichnungen dargestellter Ausführungsbeispiele näher erläutert.

Es zeigen:

Fig. 1 einen zylinderförmigen Speicherbehälter mit einer an dessen Außenseite angeordneter erfindungsgemäß ausgebildeter Isolierung in vereinfachter schematischer und schaubildlicher Darstellung;

Fig. 2 einem Mittelbereich einer Platte der Isolierung in Stirnansicht geschnitten gemäß den Linien II—II in Fig. 1;

Fig. 3 eine Verbindungsstelle zwischen zwei Querspanngliedern der Spannvorrichtung im Übergangsbereich zwischen zwei Platten in Stirnansicht geschnitten gemäß den Linien III—III in Fig. 1;

Fig. 4 einen Teil eines Speicherbehälters der mit einer erfindungsgemäß ausgebildeten Isolierung versehen ist;

Fig. 5 den Teil des Speicherbehälters nach Fig. 4 in Draufsicht;

Fig. 6 eine Verbindung der Platten der Isolierung des Speicherbehälters in vergrößertem Maßstab geschnitten nach den Linien VI—VI in Fig. 4;

Fig. 7 eine Verbindung der Platten der Isolierung des Speicherbehalters in einem der Fig. 6 ahnlichen Schnitt mit einer anderen Ausführungsform der Isolierung;

Fig. 8 eine Verbindung der Platten der Isolierung des Speicherbehälters in einem der Fig. 6 ähnlichen Schnitt der Verbindung mit einer weiteren Ausführungsvariante der Isolierung;

Fig. 9 eine Seitenansicht eines aus vier Plattenreihen gebildeten Teilstückes einer Isolierung für einen Großspeicher;

Fig. 10 den zugehörigen Schnitt nach den Linien X—X in Fig. 9;

Fig. 11 einen Verbindungsbereich zwischen zwei Platten in Draufsicht teilweise geschnitten gemäß den Linien XI—XI in Fig. 9;

Fig. 12 einen Verbindungsbereich zwischen zwei Platten in Draufsicht teilweise geschnitten gemäß den Linien XII—XII in Fig. 9;

Fig. 13 eine Seitenansicht des in Fig. 11 dargestellten Verbindungsbereiches;

Fig. 14 eine Seitenanischt des in Fig. 12 dargestellten Verbindungsbereiches;

Fig. 15 eine Stirnansicht des Verbindungsbereiches im Schnitt gemäß den Linien XV—XV in Fig. 13;

Fig. 16 eine Stirnansicht des Verbindungsbereiches im Schnitt gemäß den Linein XVI—XVI in Fig. 14;

Fig. 17 mehrere einer äußeren Wand eines Speicherbehälters zugeordnete Platten einer erfindungsgemäßen Isolierung in Draufsicht und geschnitten;

Fig. 18 eine Ausführungsvariante einer Platte für eine erfindungsgemäß ausgebildete Isolierung mit einem zwischen der Platte und der Wand des Speicherbehälters umlaufenden Querspannglied in Draufsicht und geschnitten;

Fig. 19 eine Draufsicht auf eine Verbindungsstelle zwischen zwei Seitenkanten einer Platte einer erfindungsgemäßen Isolierung mit einem profilartigen Verbindungs- und bzw. oder Verstärkungsglied in Draufsicht und im Schnitt und verschiedenen Möglichkeiten zum Verschließen der nach der Montage der Platten zwischen diesen verbleibenden Schlitzen in Draufsicht und im Schnitt;

Fig. 20 eine Draufsicht auf eine Verbindungsstelle zwischen zwei nebeneinader angeordneten Platten einer erfindungsgemäßen Isolierung mit durch Profile gebildeten Verbindungs- und bzw. oder Verstärkungsgliedern und einer möglichen Ausführungsform einer Arretierung;

Fig. 21 eine andere Ausführungsvariante einer erfindungsgemäß ausgebildeten Isolierung für einen zylinderförmigen Speicherbehälter in vereinfachter schematischer schaubildlicher Darstellung;

Fig. 22 die Wand des Speicherbehälters und die dieser vorgeordnete Isolierung in Stirnansicht und im Schnitt gemäß den Linien XXII—XXII in Fig. 21;

Fig. 23 eine schaubildliche Darstellung eines Übergangsbereichs zwischen zwei nebeneinander angeordneten Platten der Isolierung gemäß Fig. 21 teilweise im Schnitt gemäß den Linien XXIII—XXIII in Fig. 21;

Fig. 24 eine Ausführungsvariante der Verbindungs- und bzw. oder Verstärkungsglieder zwischen zwei Platten der Isolierung und diesen zugeordnete Dichtungen in Draufsicht geschnitten;

Fig. 25 eine andere Ausführungsform der Verbindungs- und bzw. oder Verstärkungsglieder zwischen zwei Platten der Isolierung und diesen zugeordnete Dichtungen in Draufsicht geschnitten;

Fig. 26 eine andere Ausführungsform der Verbindungs- und bzw. oder Verstärkungsglieder zwischen zwei Platten der Isolierung in Draufsicht und im Schnitt.

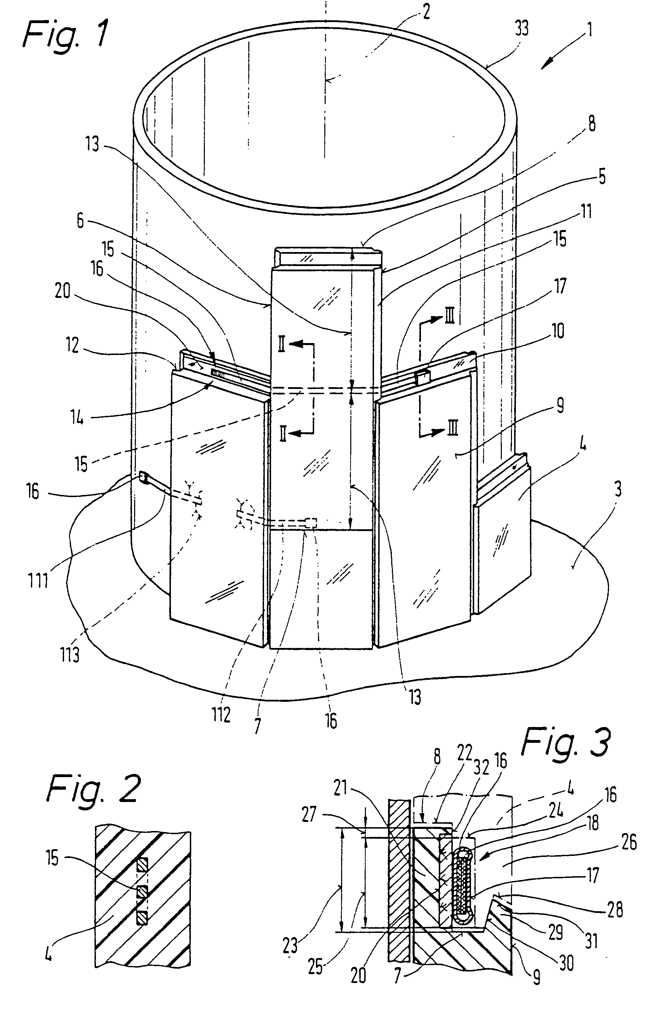

In Fig. 1 ist ein Speicherbehälter 1 gezeigt, der in etwa zylinderförmig ausgebildet ist und als Großspeicher beispielsweise für flüssige Stoffe wie Mineralöle, Bitumen oder verflüssigte Gase wie flüssigen Sauerstoff und Stickstoff verwendet werden kann. Eine Längsachse 2 des Speicherbehälters 1 verläuft in etwa senkrecht zu einer Aufstandsfläche 3. Der Speicherbehälter 1 kann aus Stahlblech oder Beton oder dgl. bestehen. Zur Wärmeisolierung des Speicherbehälters 1 ist dessen Außenseite mit Isolierkörpern dienenden Platten 4 umgeben.

Die Platten 4 sind im Bereich ihrer längeren Seitenkanten 5, 6 und im Bereich ihrer kürzeren Seitenkanten 7, 8 mit Verbindungs- und bzw. oder Verstärkungsgliedern versehen. Die Verbindungs- und bzw. oder Verstärkungsglieder im Bereich der kürzeren Seitenkanten 7, 8 werden durch zu den Plattenoberflächen 9 spiegelbildlich angeordnete Falze 10 gebildet sind. Die Verbindung- und bzw. oder Verstärkungsglieder im Bereich der längeren Seitenkanten 5, 6 sind durch Federn 11 und Nuten 12 gebildet, die formgleich ineinander passen. Wie weiters nachfolgend im Detail noch beschrieben werden wird, weist ein Querschnitt der Feder 11 eine größere Bogenlänge auf als ein Querschnitt der Nut 12. Dadurch können die Platten 4 in unterschiedliche Winkelstellungen zueinander verbracht werden. Dadurch können gleichartige Platten 4 zum Verkleiden von Speicherbehältern 1 mit unterschiedlichen Außendurchmessern verwendet werden.

Wie weiters der Zeichnung in Fig. I zu entnehmen ist werden die in Umfangsrichtung nebeneinanderliegenden Platten 4 in Richtung der Längsachse 2 jeweils um eine halbe Plattenlänge gegeneinander versetzt verlegt. Es entsteht dadurch ein Verband "Voll auf Fug". Dadurch wird eine hohe Eigensteifigkeit der Verkleidung erreicht.

In den Fig. 1 bis 3 ist weiters gezeigt, daß in einem etwa gleich großen Abstand 13 von den beiden schmäleren Seitenkanten 7, 8 der Platten 4 ein Verbindungs- und bzw. oder Verstärkungsglied einer Spannvorrichtung 14 angeordnet ist. Diese Spannvorrichtung 14 umfaßt ein Querspannglied 15 welches in die Platte 4 eingeschäumt ist. Wie besser aus Fig. 2 zu ersehen ist, ist das Querspannglied 15 mit Öffnungen versehen, die von dem Kunststoffmaterial der Platte 4 während des Schäumvorganges durchdrungen werden. Dadurch ist das Querspannglied 15 fest im Inneren der Platte 4 verankert und kann höhere Zugkräfte aufnehmen.

Die Enden des Querspanngliedes 15 sind mit Kupplungsteilen 16, 17 kraftschlüssig verbunden.

Wie weiters gezeigt können die Kupplungsteile 16, 17 zweier benachbarter Querspannglieder 15 miteinander verbunden werden und bilden eine Kupplungsvorrichtung 18. Die Kupplungsvorrichtung 18 kann gleichzeitig auch als Spannelemente ausgebildet sein. Es ist aber auch möglich, daß im Bereich von Stegen 19 die neben dem Falz verblieben sind, Verstärkungsglied 34 vorgesehen ist. In diesem Fall ist es möglich, die Querspannglieder 15 jeweils zu spannenund im gespannten Zustand mit dem Verstärkungsglied 20 z.B. über Nägel oder Schrauben zu verbinden, wobei durch diese Nägel oder Schrauben gleichzeitig die Verbindung der Kupplungsteile 16 und 17 von zwei benachbarten Querspanngliedern 15 erfolgen kann. Dadurch wird ein dichter und fester Zusammenhalt zwischen den einzelnen Platten 4 erreicht.

In Fig. 3 ist die Kupplungsvorrichtung 18 im Schnitt gezeigt. Die Kupplungsteile 16 benachbarter Querspannglieder 15 sind auf den einander zugewendeten Seiten mit Querrippen bzw. einer Verzahnung versehen. Der Kupplungsteil 17 wird durch eine Hülse gebildet, die die beiden Kupplungsteile 16 umgreift. Durch eine Verformung der Kupplungsvorrichtung 18 werden die Kupplungsteile 16, 17 zusammengepreßt und in ihrer Relativlage im gespanntem Zustand fixiert. Selbstverständich ist es auch möglich, den z.B. als Hülse Angeordneten Kupplungsteil 17 auf der den Kupplungsteilen 16 zugewandten Seite mit Querrippen einer Riffelung oder dergleichen zu versehen, sodaß es neben dem Reibungsschluß auch zu einer formschlüssigen Arretierung der Stellung der Querspannglieder 15 in der Kupplungsvorrichtung 18 kommt. Weiters ist aus der Fig. 3 ersichtlich, daß die Platten 4 im Bereich ihrer Seitenkanten 7 bzw. 8 gegengleich ausgebildet sein können. So ist einem Fortsatz 21 im Bereich der Seitenkanten 7 ein Falz 22 mit etwa gleicher Dicke zugeordnet der sich jedoch nur über einen Teil einer Höhe 23 des Fortsatzes 21 erstreckt. An diesen Falz 22 schließt eine Ausnehmung 24 an, die einen Freiraum für die Querspannglieder 15 und die Kupplungsvorrichtung 18 bildet. Eine Höhe 25 eines Fortsatzes 26 im Bereich der Seitenkante 8 ist in etwa um ein Ausmaß 27 um welches sich der Fortsatz 21 und der Falz 22 überdecken kleiner als die Höhe 23 des Fortsatzes 21. In einer Stirnkante des Fortsatzes 26 ist eine in etwa V-förmige Nut 28 vorgesehen, der ein Stützsteg 29 im Bereich der Seitenkante 7 der Platte 4 zugeordnet ist der eine gegengleiche Ausbildung aufweist. Eine Seitenfläche 30 dieses Stützstegs 29 ist in Richtung einer Plattenoberfläche 9 geneigt, während eine Seitenfläche 31 gegen die Plattenoberfläche 9 zu in Richtung der Seitenkante 8 geneigt ist. Durch den schrägen Verlauf der Seitenfläche 30 können die Platten 4 spielfrei aufeinandergestellt werden, da durch die schräge Seitenfläche 30 eine Seitenfläche 32 des Falzes 22 gegen die dieser gegenüberliegende Seitenfläche des Fortsatzes 21 gepreßt wird. Ein eventuell in den Spalt zwischen den gegenüberliegenden Seitenflächen 31 der Nut 28 bzw. des Stützsteges 29 eindringendes Wasser bzw. eine Feuchtigkeit kann durch die schräge Gestaltung der Seitenfläche 31 nach außen und unten abrinnen. Dadurch wird das Eindringen von Feuchtigkeit in die Isolierung zusätzlich erschwert, ohne das aufwendige Dichtvorrichtungen erforderlich sind. Selbstverständlich ist es möglich, im Bereich der Seitenfläche 31 zusätzlich eine Dichtung anzuordnen, die beispielsweise aus einer Lippendichtung besteht, welche einen eventuellen Freiraum zwischen der Nut 28 und dem Stützsteg 29 verschließt oder es kann dieser Hohlraum mit Kunststoffschaum ausgefüllt werden bzw. zwischen der Seitenfläche 30 des Stützsteges 29 und der dieser gegenüberliegenden Seitenfläche des Fortsatzes 26 ein Kleber oder eine Dichtmasse eingebracht werden.

Durch die Verwendung des Stützsteges 29 wird beim Auftreten eines Soges vor allem bei einer Windbelastung des Speicherbehälters 1 verhindert, daß sich die einander zugeordneten Seitenkanten 7, 8 voneinander lösen bzw. auslenken können und damit wird das zusätzlich zu der Wirkung der Querspannglieder 15 Risiko verringert, das einzelne Platten 4 durch den Unterdruck bzw. Sog aus dem Verband herausgerissen werden können.

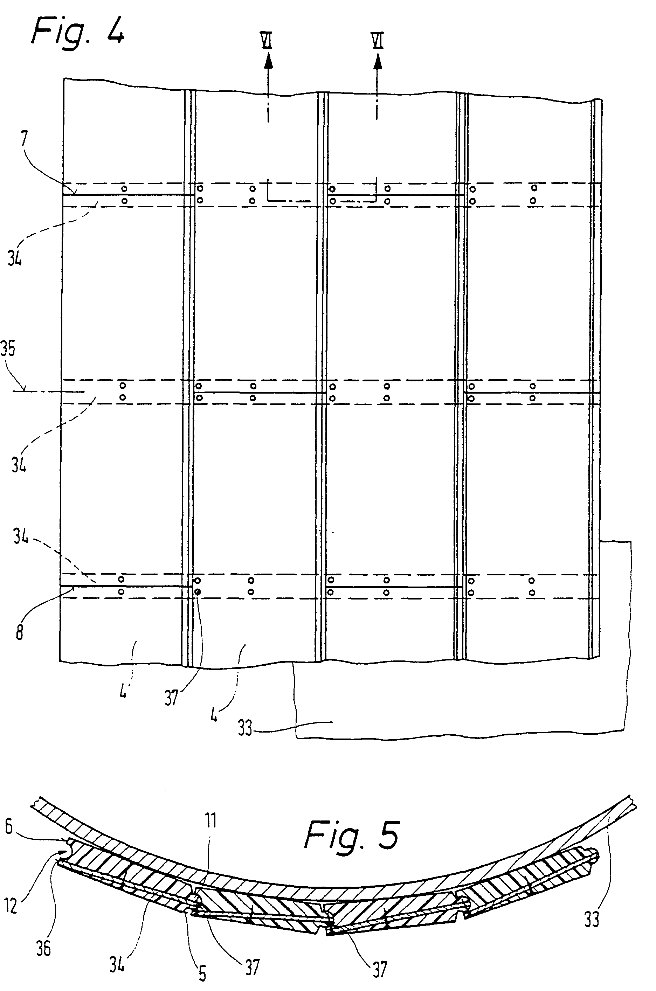

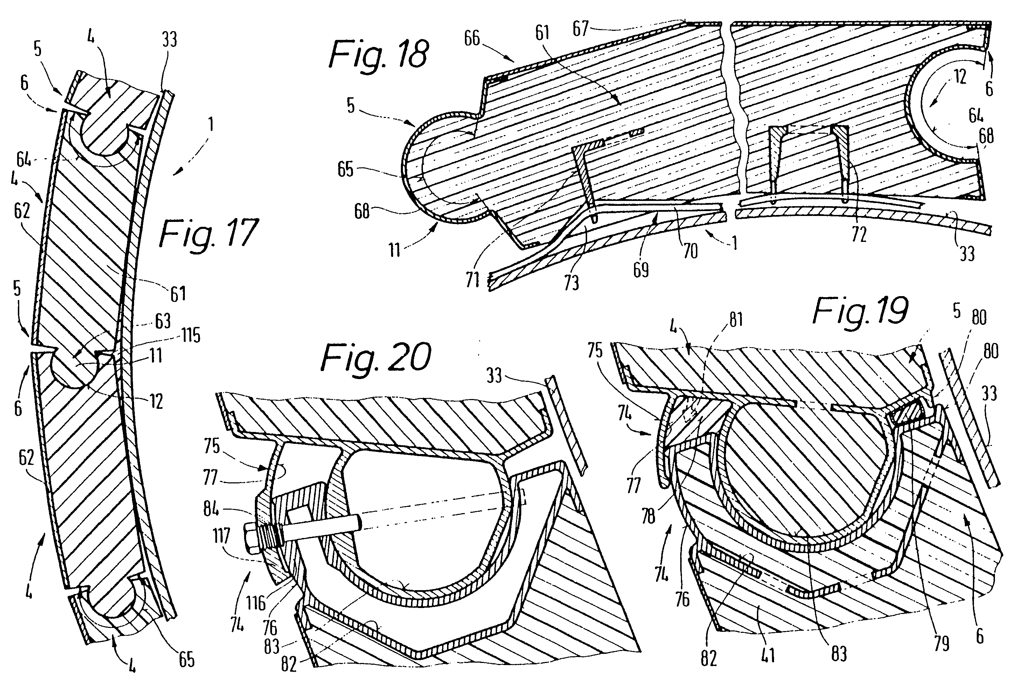

In den Fig 4 bis 6 sind an der Außenseite einer wie in Fig. 1 gezeigten zylindrischen Wand 33 eines Speicherbehälters 1 als Isolierkörper ausgebildete Platten 4 angelegt und zwar parallel zu der Erzeugenden bzw. Längsachse 2 dieses Zylinders. Jede Platte 4 weist in der einen Längsschmalseite bzw. Seitenkante 6 eine Nut 12 und an der gegenüberliegenden Längsschmalseite einen Verbindungsansatz z.B. eine Feder 11 auf (Fig. 5), wobei die Feder 11 und die Nut 12 formgleich ineinanderpassen. Im Grundriß weisen die beiden Teile Feder 11 und Nut 12 ein kreisbogenförmiges Profil auf, wobei eine Bogenlänge der Nut 12 größer als ein Halbkreisbogen und eine Bogenlänge des Verbindungsansatzes bzw. der Feder 11 noch größer als jene des Querschnittes der Nut ist, wie dies eingehend in der Fig. 17 erläutert ist.

Zur Anbringung einer solchen Isolierung wird der Verbindungsansatz z.B. die Feder 11 einer Platte 4 in die Nut 12 der benachbarten Platte 4 in deren Längsrichtung eingeschoben, und die so zusammenhängenden Platten 4 werden um die Wand 33 des Speicherbehälters 1 herumgelegt, wonach die Isolierung bereits halbfertig ist.

Wie ferner aus den Fig. 4 und 5 ersichtlich ist, weist jede Platte 4 quer zu ihrer Längsrichtung drei Verstärkungsglieder 34 auf, und zwar je eines an den Plattenenden bzw. Seitenkanten 7, 8 und eine in einer Plattenmitte 35. Da, wie aus Fig. 4 erkenntlich, die platten 4 bezüglich ihrer Länge unter halber Versetzung zueinander angeordnet sind, also einen Verband "Voll auf Fug" bilden, kommen die Verstärkungsglieder 34 in der Plattenmitte 35 immer zwischen den Verstärkungsgliedern 34 an den Plattenenden der jeweils benachbarten Reihen von Platten 4 zu liegen; sie bilden so räumlich geschlossene, ringartige Strukturen in Horizontalebenen um die zylindrische Wand 33 des Großspeichers 1 herum.

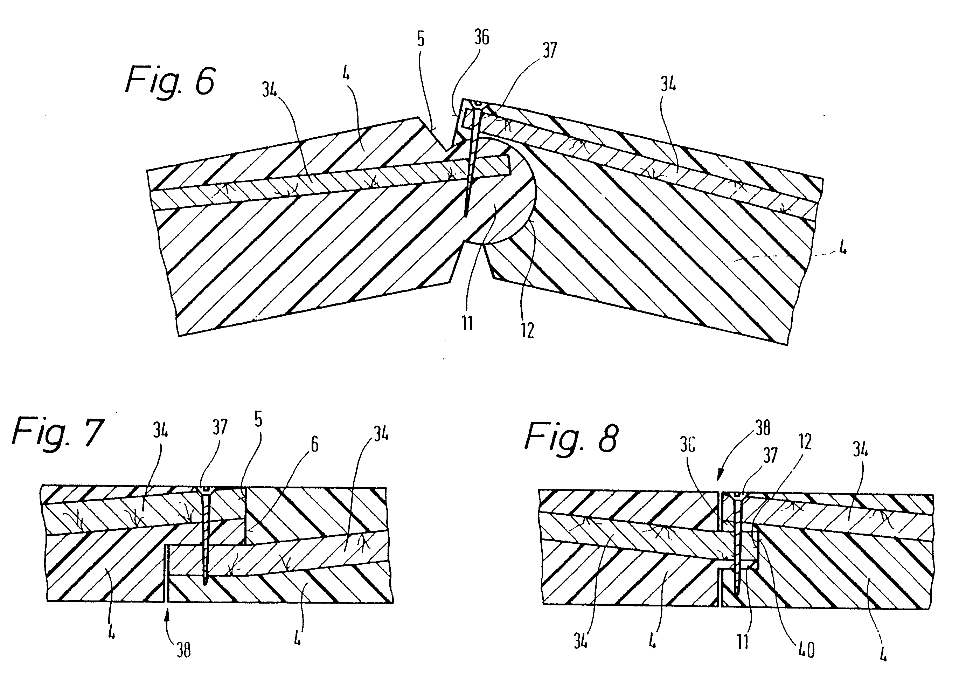

Wie aus Fig. 5 und der vergrößerten Darstellung nach Fig. 6 ersichtlich ist, reicht jedes Verstärkungsglied 34, an seinem in Fig. 6 linken Ende, von einem die Nut 12 begrenzenden Außensteg 36 bis in den Verbindungsansatz der Feder 11 an dessen der Außensteg 36 der benachbarten Platte 4 zugekehrten Seitenkanten 5. Eine Schraube 37 (Fig. 6) durchsetzt dabei die sich überlappend angeordneten Teile nämlich den Außensteg 36 und die Feder 11 benachbarter Platten 4 und die darin eingebetteten Enden der Verstärkungsglieder 34, wodurch eine kraftschlüssige Verbindung der Verstärkungen um den ganzen Umfang des zylindrischen Speichers herum erfolgt. Die in dieser Weise gebildete Armierung der Reihen von Platten 4 vermag hohen einwirkenden Sog- und Zugkräften zufolge Winddruck standzuhalten.

Daß diese Ausbildung nicht nur, wie anhand der Fig. 4 und 6 beschrieben, bei Isolierungen nach dem Patent Nr. 377 310 anwendbar ist, sondern auch bei Isolierungen, deren Platten 4 an ihrer Längsschmalseite Profilierungen anderer als kreisbogenartiger Form aufweisen, ergibt sich aus den Ausführungsformen nach Fig. 7 und 8, wobei der Einfachheit halber angenommen wird, daß eine ebene Wand eines Speicherbehälters 1 zu isolieren ist.

In diesen beiden Fällen sind ebenfalls Verbindungs und bzw. oder Verstärkungsglieder 34 vorgesehen, im Wesen genau so angeordnet und eingebettet wie bei den Ausbildungen nach Fig. 4 und 6.

Nach Fig. 7 liegt eine st fenartig abgetreppte Profilierung 38 an den Längsschmalseiten bzw. Seitenkanten 5, 6 der Platten 4 vor, sodaß sich bei der in Fig. 7 linken Platte 4 die Verbindungs- und bzw. oder Verstärkungsglieder 34 an ihrem rechten Ende an der Plattenaußenseite befinden, wogegen ihr anderes Ende, also das linke Ende der Verstärkung der in Fig. 7 rechten Platte 4, in etwa in der Plattenmitte liegt, dergestalt, daß ihre Außenseite mit einer parallel zu den Längsschmalseiten der Platten 4 liegenden Stoßfuge zusammenfällt.

Nach Fig. 8 ist die Profilierung 38 zwischen den Platten 4 als eine Art Feder — Nut — Verbindung vorgesehen. Daher liegt, ähnlich wie nach Fig. 7, das linke Ende des Verstärkungsgliedes 34 der in Fig. 8 rechten Platte 4 im äußeren Teil des Außensteges 36 an der Plattenaußenseite, und das andere Ende, hier das rechte Ende des Verstärkungsgliedes 34 der in Fig. 8 linken Platte 4, bündig mit einer äußeren Seitenfläche 40 der Feder 11.

Naturgemäß kann die Ausbildung nach den Fig. 7 und 8 auch bei Speichern mit zylindrischer äußeren Wand 33 vorgesehen werden, unter Anordnung der Platten 4 zueinander unter stumpfen Winkel, wie nach Fig. 6.

Im Rahmen der Erfindung sind weitere Abänderungen und Ausgestaltungen an den beschriebenen Isolierungen möglich. Anstelle von Schrauben 37 als Verbindungsglieder können auch Nägel, Niete u. dgl. eingesetzt werden. Als Werkstoff für die Verstärkungen bzw. Verstärkungsglieder 20, 34 können laminierte Verbundkörper, auch aus Kunststoffen, verwendet werden. Bewährt hat sich auch Schichtholz, insbesondere Sperrholz. Es können aber auch geschäumte oder extrudierte Kunststoffteile verwendet werden. Desweiteren ist es möglich, die Verstärkungsglieder durch übergeschobene oder zumindest teilweise eingeschäumte Profilteile aus Metall z.B. Aluminium, GFK, oder Kunststoff zu bilden.

Von Vorteil ist es ferner, wenn die Außenseite der Platten 4, also ihre von der Wand 33 des Speicherbehälters 1 abgewendete Seite, mit einer Deckschicht, z.B. aus Aluminium, versehen ist.

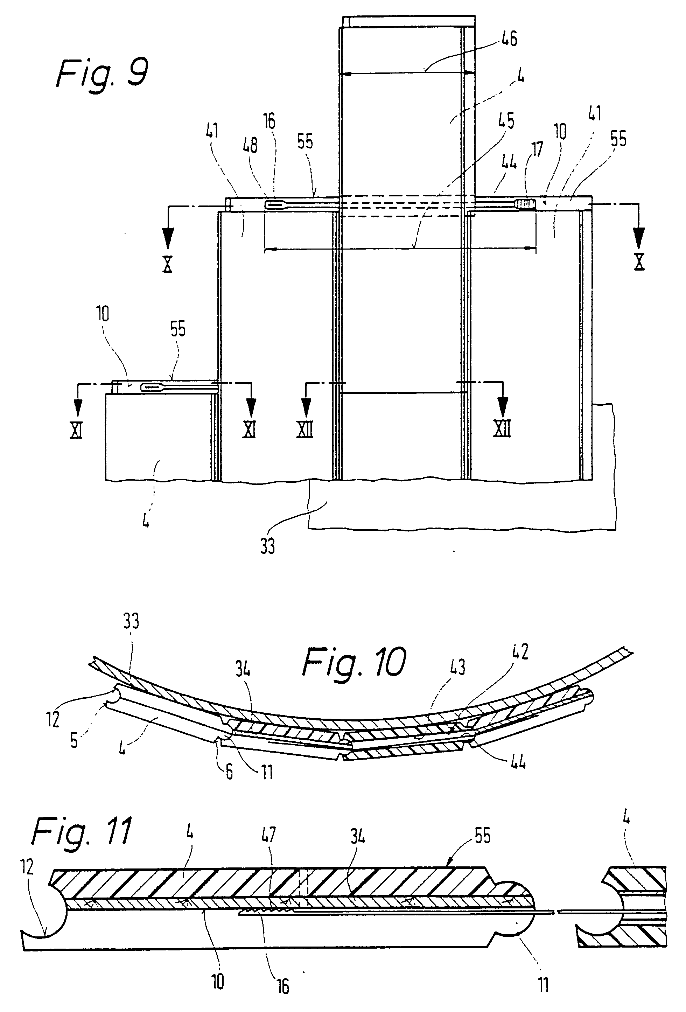

In Fig. 9 und 10 sind an der Außenseite einer zylindrischen Wand 33 eines Großspeichers mit vertikaler Längsachse als Platten 4 ausgebildete Isolierkörper angelegt, und zwar parallel zu der Erzeugenden dieser zylindrischen Wand. Jede Platte 4, die an ihrer Außenseite mit einer Deckschicht, z.B. aus Aluminium, versehen sein kann, weist in der einen Längsschmalseite bzw. Seitenkante 5 eine Nut 12 und an der gegenüberliegenden Längsschmalseite bzw. Seitenkante 6 einen Verbindungsansatz bzw. eine Feder 11 auf (Fig. 10), wobei der Verbindungsansatz also die Feder und die Nut 12 formgleich ineinanderpassen. Im Grundriß weisen die beiden Teile wie Feder 11 und Nut 12 ein kreisbogenförmiges Profil auf, wobei die Bogenlänge der Nut 12 größer als ein Halbkreisbogen und die Bogenlänge des Verbindungsansatzes noch größer als jene des Querschnittes der Nut 12 ist, wie dies eingehend in der Fig. 17 und der AT-PS 377 310 erläutert ist.

Die Platten 4 werden dabei, wie in Fig. 9 erkenntlich, mittig in Längsrichtung gestaffelt versetzt, also in einem Verband "Voll auf Fug" verlegt; die oberen und unteren Randteile der Platten 4 sind profiliert, nämlich mit einer stufenartigen Abtreppung bzw. einem Falz 10 ausgebildet.

Zur Anbringung einer solchen Isolierung wird der Verbindungsansatz bzw. die Feder 11 einer Platte 4 in die Nut 12 der benachbarten Platte 4 in deren Längsrichtung eingeschoben, und die so zusammenhängenden Platten 4 werden um die Wand 33 des Speichers herumgelegt, wonach die Isolierung bereits halb fertig ist.

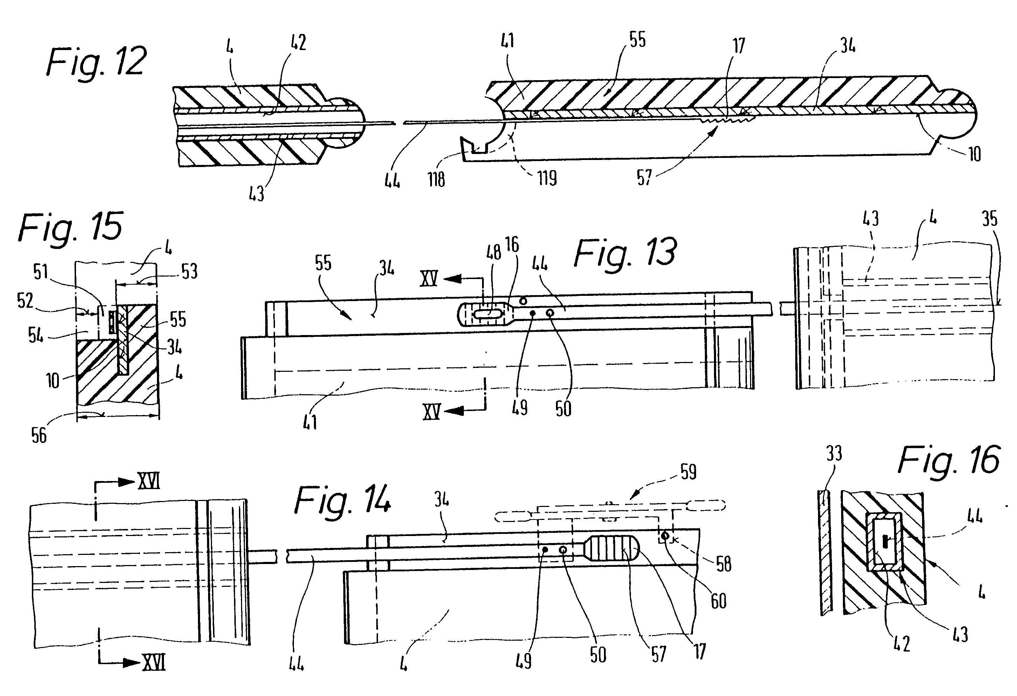

Wie ferner aus Fig. 10 ersichtlich ist, weist jede Platte 4 quer zu ihrer Längsrichtung an der Abtreppung bzw. dem Falz 10 eine den Hartschaumstoff gegen Deformation schützende Verstärkungen, z.B. ein Verstärkungsglied 34 aus Sperrholz, auf, und zwar nur an den oberen Randteilen, wie dies auch im einzelnen aus den Fig. 11 — 14 hervorgeht. Wie aus Fig. 15 in der der zugehörige untere profilierte Randteil der nach oben folgenden Platte 4 strichliert dargestellt ist, ersichtlich, liegt das Verstärkungsglied 34 mit seiner oberen Hälfte vor der Abtreppung bzw. dem Falz 10, und seine untere Hälfte ist in den Schaumstoffkörper der Platte 4 eingeschäumt, um darin gut verankert zu sein. Da, wie aus Fig. 9 erkenntlich, die Platten 4 bezüglich ihrer Länge unter halber Versetzung zueinander angeordnet sind, kommen immer die Abtreppungen bzw. der Falz 10 und die Verstärkungsglieder 34 in der Plattenmitte 35 der jeweils zu Platten 41 benachbarten Platte 4 zu liegen.

Wie in Fig. 16 in Verbindung mit Fig. 9 gezeigt ist weist jede Platte 4, 41 in ihrer Plattenmitte 35 als Aussparung 42 ein Rohr auf, das ein Verbindungs- und bzw. oder Verstärkungsglied 43 bildet. Dieses ist zweckmäßig ein metallisches Vierkantrohr, das ein z.B. durch ein Metallband gebildetes Querspannglied 44 aufnimmt. Selbstverständlich ist es auch möglich anstelle des Vierkantrohrs ein Rohr mit rundem Querschnitt, ein U-Profil oder im Bereich der die Aussparung 42 in Richtung der Wand 33 begrenzenden Oberfläche nur ein plattenförmiges Verstärkungsglied anzuordnen. Als Material kommen sowohl Holz, Kunststoffe oder Eisen-bzw. Nichteisenmetalle in Frage. Eine Länge 45 des Querspanngliedes 44 ist etwas größer als eine doppelte Breite 46 der Platte 4, 41, sodaß jedes Metallband einer Platte 4 bis über die Hälfte der jeweils benachbarten Platten 41 vorragt.

Das in den Fig. 11 und 13 linke Ende des Bandes bzw. Querspanngliedes 44 weist einen verbreiterten Endteil als Kupplungsteil 16 auf, der innen eine quer zur Bandlängsrichtung verlaufende Verzahnung 47 und darin zusätzlich ein Langloch 48 aufweist. Im Abstand von dieser Verzahnung 47 sind gegen die Bandmitte hin zwei Bohrungen 49 ausgebildet, um wie bei der rechten der beiden Bohrungen gezeigt Verankerungsschrauben 50 aufzunehmen. Wie aus Fig. 15 erkenntlich, liegt das Band des Querspanngliedes 44 in einer Aussparung 51 zwischen den Abtreppungen der profilierten Randteile an den oberen und unteren Stirnseiten der Platte 4. Dazu ist eine Summe von Dicken 52 und 53 von Stegen 54, 55 kleiner als eine Dicke 56 der Platten 4.

Das andere, in den Fig. 12, 14 rechte Ende des als Band ausgebildeten Querspanngliedes 44 weist ebenfalls einen verbreiterten Endteil als Kupplungsteil 17 auf, jedoch hier mit einer außenliegenden Verzahnung 57. Auch an diesem Kupplungsteil 17 sind Bohrungen 49 für je eine Verankerungsschraube 50 vorgesehen. Jedem (rechten) End- bzw. Kupplungsteil 17 eines Bandes ist weiters eine von im Abstand liegende Aussparung 58 zugeordnet, die sich in den oberen Randteil jeder Platte 4 durch das Verstärkungsglied 34 hindurch erstreckt und das Einsetzen eines Spannorganes 59 für das als Band ausgebildete Querspannglied 44 z.B. einer Spannzange, ermöglicht.

Beim Montagevorgang zur Festlegung der Platten 4 untereinander wird wie folgt vorgegangen:

Wenn z.B. die in Fig. 9 oberste Platte 4 zwischen die beiden ihr benachbarten Platten 41, wie eingangs beschrieben, von oben her eingeschoben worden ist, befinden sich in der dargestellten Endstellung dann die End- bzw. Kupplungsteile 16, 17 des aus der Aussparung 42 beiderseits herausragenden Bandes des Querspanngliedes 44 genau in der Mitte vor den Stegen 55 der benachbarten Platten 41, bzw. vor deren Verstärkungsglied 34. Nun wird durch die Bohrungen 49 des linken End- bzw. Kupplungsteiles 16 mindestens eine Verankerungsschraube 50 in das Verstärkungsglied 34 eingeschraubt, wodurch der linke Endteil des Bandes mit der linken benachbarten Platte 41 für dauernd verbunden ist. Hierauf erfolgt mittels einer Spannzange 59 in Fig. 14 in dünnen vollen Linien dargestellt, von der ein Zapfen 60 in die Aussparung 58 im Steg 55 bzw. dem Verstärkungsglied 34 der Platte 41 eingesetzt wird und deren andere Backe am rechten Kupplungsteil 17 des Querspanngliedes 44 angreift, ein Spannen desselben und im gespannten Zustand danach eine Festlegung des rechten Kupplungsteils 17 mittels mindestens einer weiteren Verankerungsschraube 50 in einer der Bohrungen 49. Bei der (nach rechts) neben der Platte 41 folgenden weiteren Platten 4 wird dann das Querspannglied 44 mit dem linken Kupplungsteil 16 in gegenseitigen Eingriff der Verzahnungen 47 und 57 gebracht, wobei das Langloch 48 einen Ausgleich bezüglich Dimensionstoleranzen der Platten 41 ermöglicht, und dann wird mittels einer Verbindungsschraube 50, die ein selbstschneidendes Gewinde aufweisen kann und durch das Langloch 48 in den darunterliegenden Kupplungsteil 17 eingeführt wird, eine dauernde Verbindung zwischen den über die Verzahnungen 47, 57 in Eingriff stehenden Kupplungsteile 16, 17 der benachbarten Querspannglieder 44 hergestellt. Ist in dieser Weise die Montage der Platten 4 um den Behälter herum, z.B. in einer Reihe oder sektorweise, fertiggestellt, wird ebenso schließlich der rechte Kupplungsteil 17 des letzten Querspanngliedes 44 mit dem linken Kupplungsteil 16 des ersten Querspanngliedes 44 der Platte 4 durch die ein selbstschneidendens Gewinde aufweisende Verankerungsschraube 50 für dauernd verbunden. Dadurch wird durch die so untereinander verbundenen Bänder der Querspannglieder 44 um die zylindrische Wand 33 des Speicherbehälters 1 herum eine räumliche, in kreisringform geschlossene Armierung gebildet, die den hohen Beanspruchungen durch auftretende Windkräfte standzuhalten vermag.

Im Rahmen der Erfindung sind mannigfaltige Abänderungen und Ausgestaltungen an dem beschriebenen Ausführungsbeispiel möglich. Als Verstärkungsteile können anstelle von Sperrholz oder Schichtholz auch andere schraubbare Werkstoffe, wie laminierte Verbundkörper, auch aus Kunststoffen, eingesetzt werden. Die Verbindung der Bänder bzw. der Querspannglieder 15 untereinander kann auch durch Haken erfolgen; ferner können hiefür Spannschlösser oder Bajonettverschlüsse eingesetzt werden.

Die Aussparungen 42 müssen nicht unbedingt durch ein Rohr gebildet bzw. begrenzt sein; in manchen Fällen kann ein U-Profil oder eine Platte verwendet oder dieses auch weggelassen werden. Auch können die Aussparungen 42 durch nutartige Vertiefungen in der Außenfläche der Platten 4, 41 gebildet sein; der Nutboden ist dann ebenfalls zweckmäßig mit Verstärkungen aus Sperrholz od. dgl. versehen. Solche Aussparungen müssen nicht unbedingt in Plattenmitte liegen; sie könnten z.B. auch in den Dritteln der Längsschmalseiten liegen.

In Fig. 17 ist eine äußere Wand 33 eines Speicherbehälters 1 gezeigt. Dieser Wand 33 ist eine Isolierung vorgeordnet die aus Platten 4 besteht. Diese Platten bestehen aus einem Schaumkunststoffkörper 61 und einer auf diese aufgebrachten vorzugsweise beim Schäumvorgang mit dieser verbundenen Deckschicht 62. Zur Verbindung der Platten 4 im Bereich ihrer Seitenkanten 5, 6 sind durch Nuten 12 und Federn 11 gebildete Verbindungs- und bzw, oder Verstärkungsglieder 63 vorgesehen. Um die Platten 4 für die Isolierung von Speicherbehältern 1 mit unterschiedlichen Durchmessern verwenden zu können weist die Nut 12 einen kreisbogenförmigen Querschnitt auf. Ebenso ist die Feder mit einem kreisbogenförmigen Querschnitt ausgebildet und in Art eines Zylinderteils ausgeführt. Die Durchmesser der Nut 12 und der Feder 11 sind gleich groß, sodaß die Platten spielfrei ineinandergeführt sind. Um die Verschwenkung der Platten 4 in radialer Richtung relativ zum Speicherbehälter 1 zu ermöglichen, ist eine Bogenlänge 64 der Nut 12 größer als ein Halbkreisbogen. Eine Bogenlänge 65 der Feder 11 ist größer als die Bogenlänge 64 des Querschnittes der Nut 12. Durch die Differenz der Bogenlänge 64 und 65 kann der Verschwenkbereich der beiden Platten 4 zueinander festgelegt werden. Dadurch, daß die Bogenlänge des Querschnittes der Nut 12 größer ist als die eines Halbkreisbogens wird in jeder möglichen Drehstellung der Nut 12 und Feder 11 relativ zueinander eine fixe Verbindung zwischen Nut 11 und Feder 12 erreicht.

In Fig. 18 ist eine andere Ausführungsform einer Platte 66 gezeigt. Die Platte weist einen Knick 67 auf und ist V-förmig ausgebildet. Der V-Winkel ist nur wenig kleiner als 180°. Dadurch wird erreicht, daß die Platte 66 an zwei Stellen auf der Wand 33 des Speicherbehälters 1 anliegt. Im Bereich der Seitenkanten 5, 6 sind durch Profile 68 gebildete Verbindungs- und bzw. oder Verstärkungsglieder 69 angeordnet. Diese können beispielsweise durch extrudierte Profile gebildet sein. Die extrudierten Profile werden mit dem Schaumkunststoffkörper 61 durch einen Klebevorgang verbunden oder der Schaumkunststoffkörper 61 wird an die Profile angeschäumt. Eine Bogenlänge 64 der Nut 12 ist wieder größer als die eines Halbkreises und die Bogenlänge 65 der Feder 11 ist größer als die Bogenlänge 64. Dadurch wird der gleiche Effekt wie er bereits bei den Platten 4 in Fig. 17 beschrieben wurde erreicht. Der Platte 66 ist aber noch ein weiteres Verbindungs- und bzw. oder Verstärkungsglied 69 zugeordnet, welches durch ein Querspannglied 70 gebildet ist. Diesem Verbindungs- und bzw. oder Verstärkungsglied 69 sind Verbindungs- und bzw. oder Verstärkungsglieder 71, 72 zugeordnet. Diese Verbindungs- und bzw. oder Verstärkungsglieder 71, 72 sind in den Schaumkunststoffkörper 61 eingeschäumt und ragen über die der Wand 33 des Speicherbehälters 1 zugewandte Oberfläche der Platte 66 — wie beim Verindungsund bzw. oder Verstärkungsglied 72 gezeigt — vor oder sind in Ausnehmungen 73 dieser Oberflächen angeordnet, sodaß durch die Verbindungs- und bzw. oder Verstärkungsglieder 71 die Wand 33 oder eine darauf aufgebrachte Rostschutzbeschichtung oder dgl. nicht beschädigt wird.

In Fig. 19 ist eine Ausführungsform von Verbindungs- und bzw, oder Verstärkungsgliedern 74 gezeigt, welche den Seitenkanten 5 bzw. 6 von benachbarten Platten 4, 41 zugeordnet ist. Die Verbindungs- und bzw. oder Verstärkungsglieder 74 bestehen beispielsweise aus Profilen 75, 76, die aus extrudiertem Kunststoff bzw. aus Aluminium bestehen. Im dargestellten Ausführungsbeispiel sind diese Profile 75, 76 als Hohlkammerprofile ausgebildet, die gegen eine Verformung quer zu ihrer Längsachse eine höhere Stabilität aufweisen, wodurch die Gesamtfestigkeit der Platten 4 bzw. 41 zusätzlich erhöht wird. Außerdem werden dadurch die Platten 4, 41 im Übergangsbereich derart verstärkt, daß auch bei hohen Sogkräften ein dichter Abschluß zwischen den Platten 4, 41 erreicht wird. Um die Platten 4, 41 in ihrer jeweiligen Winkellage in Abhängigkeit vom Radius bzw. Durchmesser des Speicherbehälters 1 zu fixieren ist es wie in Fig. 19 beispielsweise gezeigt, möglich, einen Hohlraum 77 mit schematisch durch Schraffur angedeuteten Kunststoffschaum 78 auszuschäumen um die Position oder die relative Stellung der Profile 75, 76 zueinander zu fixieren. Um den beim Schäumvorgang auftretenden Schäumdruck entgegenzuwirken ist es auf der der Wand 33 zugewendeten Seite der beiden Profile 75, 76 möglich ein Distanzstück 79 z.B. einen Keil oder dgl. einzusetzen. Überdies können im Bereich des Distanzstückes 79 sich gegenseitig überlappende Dichtlippen 80 vorgesehen sein, wobei bei einer dichten Ausbildung oder Führung der Dichtlippen 80 aneinander auch dieser Zwischenraum gleichzeitig ausgeschäumt werden kann. Um den Kunststoffschaum 78 in dem Hohlraum 77 ausreichend zu verankern ist es wie mit strichlierten Linien angedeutet, möglich, in dem Profil 75 oder am Profil 76 Verankerungsstege 81 anzuordnen, sodaß sich der Kunststoffschaum 78 in dem Hohlraum 77 festsetzen kann. Unter anderem ist es aber auch möglich, die Hohlkammern 82, 83 mit einem Kunststoffschaum 78 zu füllen, sodaß eine ununterbrochene Isolierwirkung über die gesamte Isolierung auch in dem Bereich zwischen den Kunststoffkörpern der Platten 4, 41 erreicht wird. Dies kann beispielsweise dadurch erfolgen, daß wie schematisch angedeutet, Öffnungen in den zwischen den Platten 4, 41 und den Hohlräumen 82, 93 liegenden Stegen der Profile 75, 76 angeordnet werden.

In Fig. 20 ist eine abgeänderte Ausführungsform der Profile 75, 76 gezeigt, wobei die Fixierung der Relativstellung der Profile 75, 76 zueinander durch einen Fixierstift 84 erfolgt. Dieser Fixierstift 84 kann auch mit einem Gewindeansatz beispielsweise einem selbstschneidenden Gewinde versehen sein, um ihn beispielsweise beim Einsetzen gleichzeitig mit den Profilen 75 und 76 zu verbinden. Dazu sind die Wandstärken der Profile 75, 76 wie schematisch angedeutetverstärkt, sodaß eine ausreichende Festigkeit gegen Lochlaibung entsteht. Wie weiters durch strichlierte Linien schematisch angedeutet kann der Fixierstift 84 auch den gesamten Hohlraum 83 des Profils 75 durchsetzen und auf der gegenüberliegenden Seite die Profile 75 und 76 durchdringen.

Selbstverständlich ist es bei dieser Ausführungsform ebenso möglich, die mit gleichen Bezugszeichen bezeichneten Hohlkammern 82 und 83 der Profile 75, 76 mit Kunststoffschaum zu füllen bzw. zusätzlich in den Hohlraum 77 Kunststoffschaum oder ein Distanzstück einzubringen.

Ein Vorteil der dargestellten Ausbildung der Verbindungs- und bzw. oder Verstärkungsglieder 74 liegt darin, daß durch die gegenseitige teleskopartige Führung eine absolute Dichtheit gegen das Eindringen insbesondere von Schlagwasser in den Innenraum der Isolierung vermieden wird.

Anstelle des dargestellten Fixierstiftes 84 können selbstverständlich auch beliebige andere Fixiereinrichtung wie Schrauben, Federbolzen, Hohlnieten oder dgl. verwendet werden.

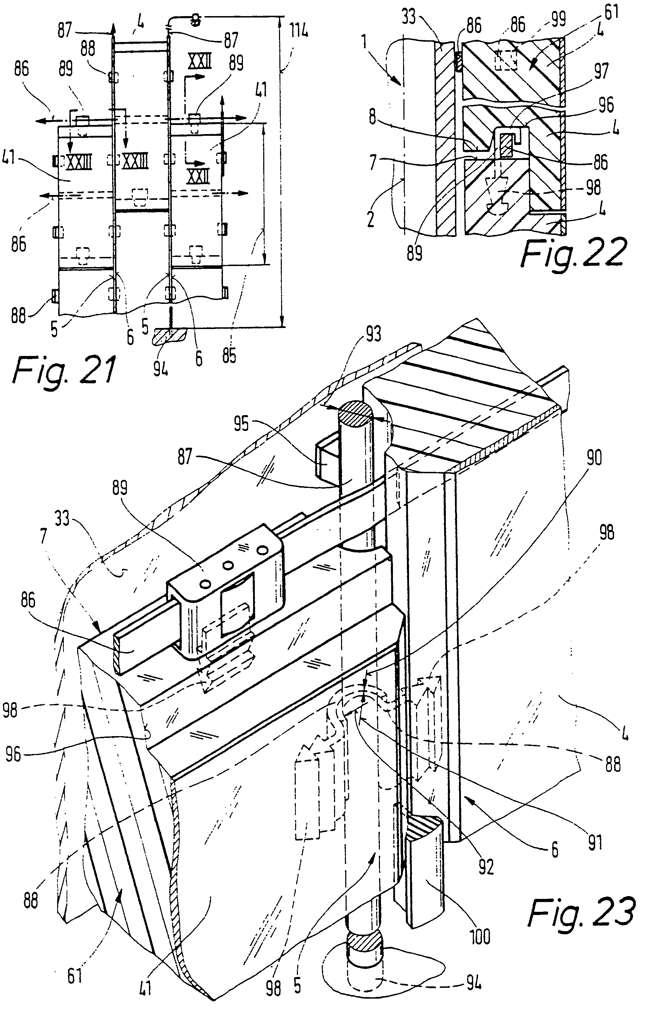

In den Fig. 21 bis 23 ist eine andere Ausführungsvariante einer erfindungsgemäßen Isolierung unter Verwendung von einzelnen Platten 4 beschrieben. Wie bereits anhand der Fig. I, 4 und 9 erläutert werden die parallel zur Längsachse 2 des Behälters verlaufenden nebeneinanderliegenden Reihen jeweils um die Hälfte einer Länge 85 der Platten 4 versetzt. Während nun bei den Ausführungsformen gemäß den Fig. I bis 20 die Verbindung der einzelnen Platten 4 bzw. 41 über durch Federn und Nuten gebildete über die Länge der Seitenkanten durchlaufende Profilstege verbunden sind, erfolgt die Halterung der Platten 4, 41 beim vorliegenden Ausführungsbeispiel hauptsächlich durch die Querspannglieder 86 und Längsspannglieder 87. Die Platten 4, 41 sind im Bereich ihrer Seitenkanten 5, 6 und der Seitenkanten 7 mit Verbindungs- und bzw. oder Verstärkungsgliedern 88 bzw. 89 versehen. Die Verbindungs- und bzw. oder Verstärkungsglieder 88 im Bereich der einander gegenüberliegenden Seitenkanten 5, 6 der Platten 4, 41 sind als Halbschalen ausgebildet. Ein Innendurchmesser 90 der Halbschalen der im Bereich der Seitenkante 5 angeordneten Verbindungs- und bzw. oder Verstärkungsglieder 88 entspricht im wesentlichen einem Außendurchmesser 91 der den Seitenkanten 6 zugeordneten Verbindungs- und bzw. oder Verstärkungsglieder 88. Ein Innendurchmesser 92 der mit der Seitenkante 6 verbundenen Verbindungs- und bzw. oder Verstärkungsglieder 88 entspricht im wesentlichen einem Außendurchmesser 93 des Längsspanngliedes 87 welches beispielsweise durch ein Stahlseil oder durch einen flexiblen Rohrkörper oder dgl. gebildet sein kann. Vor allem dann wenn das Längsspannglied 87 durch ein Rohr aus Kunststoff oder Metall gebildet ist kann dieses im unteren Endbereich in einem Betonfundament 94 befestigt sein und sich mit Stüztstempeln 95 auf der Wand 33 des Speicherbehälters 1 abstützen. Selbstverständlich ist es möglich, anstelle des Betonfundaments 94 auch eine Tragkonstruktion aus Metall oder ähnlichen Materialien vorzusehen, in der das untere Ende des das Längsspannglied 87 bildenden Stahlseiles oder Rohrkörpers verankert ist. Die Verbindung der Platten 4, 41 im Bereich ihrer einander zugewendeten Seitenkanten 7, 8 erfolgt wie besser aus Fig. 22 zu ersehen ist über das Querspannglied 86 welches ein in Umfangsrichtung um den Speicherbehälter 1 umlaufendes Band, Seil oder dgl. sein kann. Wie in der Darstellung in Fig. 22 gezeigt können dabei zusätzlich die Verbindungs- und bzw. oder Verstärkungsglieder 89 einen Verriegelungsanschlag für die übereinander angeordneten Platten 4 bilden. Dazu ist im Bereich der Seitenkante 8 eine Nut 96 angeordnet, in die in ihrer Querschnittsform der Nut 96 angepaßte Stützbügel 97 eingreifen. Gegen diese Stützbügel des Verbindungs- und bzw. oder Verstärkungsgliedes 89 stützt sich auch das Querspannglied 86 ab und bewirkt eine Positionierung der Platten 4 in radialer Richtung bezogen auf den Speicherbehälter 1 bzw. dessen Wand 33. Dadurch wird auch bei starken Unterdrücken im Bereich der Silo-Oberfläche bei starken Stürmen ein Flattern der Platten 4 im Bereich der einander zugewandten Seitenkanten 7 und 8 zuverlässig ausgeschaltet. Die dabei auftretenden Kräfte werden durch das ringförmige Querspannglied 86 aufgenommen und verteilen sich gleichmäßig über die Verbindungs- und bzw. oder Verstärkungsglieder 88, 89 auf die einzelnen Platten 4, 41.

Die Verbindungs- und bzw. oder Verstärkungsglieder 88, 89 sind mit Verankerungsteilen 98 versehen, die in den Schaumkunststoffkörper 61 der Platten 4 bzw, 41 hineinragen und in vorteilhafter Weise in diese eingeschäumt sind. Es ist aber ebenso möglich in den Platten Ausnehmungen vorzusehen in welchen mittels eines gießfähigen Harzes oder Klebers die Verbindungs- und bzw. oder Verstärkungsglieder 88, 89 befestigt werden.

Wie am besten aus Fig. 23 ersichtlich verläuft das Querspannglied 86 wenn es den Seitenkanten 7, 8 der einzelnen Platten 4, 41 zugeordnet ist im Bereich der Nut 96 während es im Mittelbereich der Platten 4 zwischen der Platte 4 und der Wand 33 verlaufen kann. Die Verbindung zwischen dem Querspannglied 86 und der Platte 4 im Mittelbereich kann beispielsweise wie in Fig. 18 gezeigt durch Verbindungs- und bzw. oder Verstärkungsglieder 71 erfolgen.

Wie jedoch weiters mit strichlierten Linien in Fig. 22 angedeutet ist es auch möglich im Mittelbereich der Platten 4, 41 eine Ausnehmung 99 vorzusehen, durch die das Querspannglied 86 hindurchgeführt wird. Zwischen dem Querspannglied 86 und der diesen in Richtung der Wand 33 zugeordneten Oberfläche der Ausnehmung 99 kann ein Verstärkungsglied 34 wie das anhand der Fig. 10 bis 16 beschrieben wurde vorgesehen sein. Ebenso ist es aber auch möglich, das Querspannglied 86 wie in Verbindung mit Fig. 2 und 3 beschrieben in den Kunststoffschaumkörper der Platten 4, 41 einzuschäumen. Während bei den Ausführungsformen gemäß den Fig. I bis 20 die Abstützung gegen ein Öffnen der Platten bei einem Unterdruck durch Sogwirkung ausschließlich durch die Querspannglieder erfolgt teilen sich die auf die Plattenoberfläche einwirkenden Sogkräfte bei dem vorliegenden Ausführungsbeispiel auf die Längs- und Querspannglieder 86 bzw. 87 auf. Dazu umfassen die Querspannglieder 86 die Längsspannglieder 87 auf ihrer von der Wand 33 abgewendeten Seite und fixieren dadurch über die Längsspannglieder 87 die im vorliegenden Ausführungsbeispiel vertikal verlaufenden Seitenkanten 7 oder 8 gegen eine Relativbewegung in Sogrichtung ab. Nachdem oder bevor die Querspannglieder 87 gespannt sind bzw. werden werden auch die Länsspannglieder 87 straff gezogen bzw. gespannt sodaß auch in den Bereichen zwischen den Querspanngliedern die Platten über die Längsspannglieder 87 spielfrei gehaltert sind.

Die Verlegung der Platten 4, 41 deren Seitenkanten durch die Verbindungs- und bzw. oder Verstärkungsglieder 88, 89 versteift sind und welchen ein durch die Längs- bzw. Querspannglieder gebildetes zusätzliches Verstärkungsnetz überlagert wird erfolgt nun folgender Maßen:

Zuerst werden in einem der Breite 46 der Platten 4, 41 entsprechenden Abstand die Längsspannglieder 87 angeordnet und vorgespannt. Danach wird die erste Reihe der Platten zwischen den Längsspanngliedern 87 eingesetzt. Dann werden im Bereich der Längsmitte und im Bereich der Enden der ersten Plattenreihe die Querspannglieder 86 montiert. Diese werden je nachdem ob die Isolierung über den Umfang des Speicherbehälters in einem Arbeitsgang oder in mehreren nebeneinanderliegenden Bereichen aufgebracht wird die Querspannglieder provisorisch oder entgültig in dem gewünschten Ausmaß gespannt. Nun wird die nächste Reihe der Platten 4, 41 zwischen die Längsspannglieder 87 eingefügt, wobei gleichzeitig die dazu benötigten Querspannglieder 86 montiert werden. Ist die Isolierung fertiggestellt werden auch die Längsspannglieder 86 auf ein vorbestimmtes Maß gespannt, soda8 die zwischen den Querspanngliedern liegenden Verbindungs- und bzw. oder Verstärkungsglieder 88 durch das gespannte Längsspannglied 87 in der gewünschten Position gehalten werden.

Um auch bei dieser Ausführungsform bei welcher sich die Schaumkunststoffkörper 61 nicht direkt überlappen eine entsprechende Abdichtung zwischen diesen zu erzielen können im Ubergangsbereich wie schematisch angedeutet Dichtungen 100 angeordnet sein.

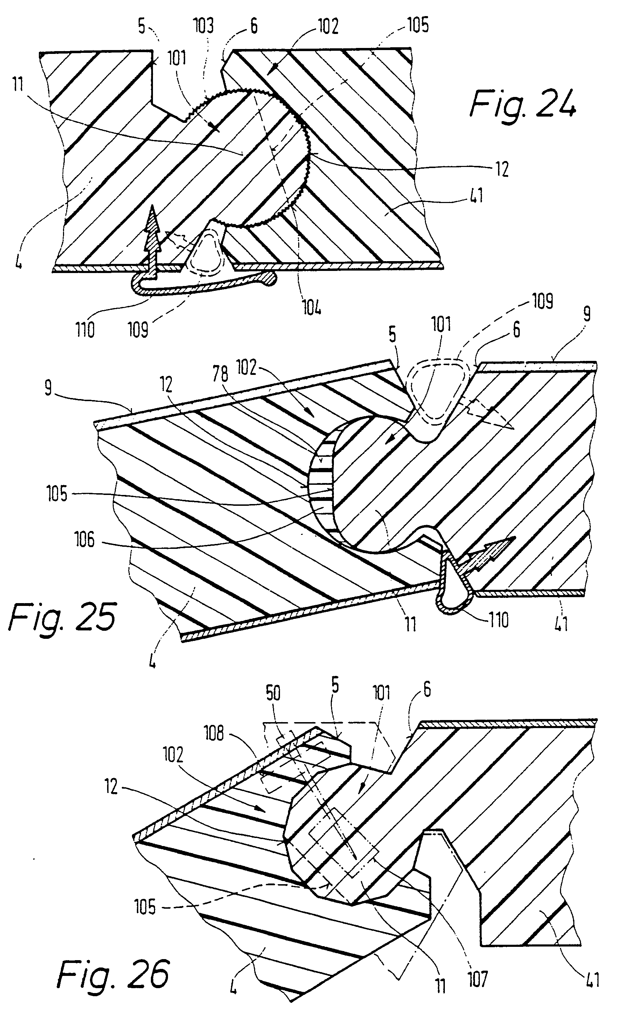

In den Fig. 24 bis 26 sind weiters unterschiedliche Ausbildungen der Federn 11 und Nuten 12 von Verbindungs- und bzw. oder Verstärkungsgliedern 101, 102 gezeigt, die bevorzugt im Verlauf der vertikalen Seitenkanten 5, 6 der Platten 4, 41 angeordnet sind. Vor allem soll durch diese Gestaltung die Verstellbarkeit der ineinander geführten Verbindungs- und bzw. oder Verstärkungsglieder 101, 102 in ihrer jeweiligen winkeligen Lage zueinander feststellbar sein. Dazu ist das als Feder 11 ausgebildete Verbindungs- und bzw. oder Verstärkungsglied 101 mit einer Längsriffelung 103 versehen. Dieser Längsriffelung 103 ist im Bereich der Nut 12 des Verbindungsund bzw. oder Verstärkungsgliedes 102 eine gegengleiche Längsriffelung 104 zugeordnet. Dadurch können die beiden Platten 4, 41 relativ feinfühlig um geringe Winkelschritte zueinander verstellt werden und sind in ihrer jeweiligen Position durch die Längsriffelung automatisch arretiert.

Bei der Ausführungsform in Fig. 25 wird durch eine Abflachung 105 erreicht, daß bei einer extremen Winkelstellung der Plattenoberflächen 9 zueinander die Feder 11 leichter in die Nut 12 eingesetzt werden kann. Bei einem Verdrehen in ihre in Fig. 25 gezeigte Gebrauchslage ist dann wieder eine vollflächige Führung zwischen Feder 11 und Nut 12 gegeben. Um auch bei einer derartigen Ausgestaltung der Verbindungs- und bzw. oder Verstärkungsglieder 101, 102 eine formschlüssige Verbindungs- bzw. Arretierung sicherzustellen kann ein zwischen der Abflachung 105 und der Nut 12 verbleibender Hohlraum 106 mit einem Kunststoff z.B. einem Kunststoffschaum 78 wie Polyurethan oder dgl. ausgeschäumt oder gegossen werden. Dadurch werden die Feder 11 und die Nut 12 formschlüssig miteinander verbunden und eine Stellungsveränderung der Platten 4, 41 nach der Montage ist nicht mehr möglich. Dadurch wird auch verhindert, daß es im Bereich der Seitenkanten 5, 6 bei starken Unterdruckerscheinungen durch Sogwirkung zu einem Flattern kommen kann.

In Fig. 26 ist die Feder 11 und die Nut 12 jeweils mit einem mehreckigen Querschnitt versehen, wobei die Anzahl der Ecken bei Nut 12 und Feder 11 gleich ist, oder die Eckenzahl der Nut 12 ein gerades Vielfaches der Eckenzahl der Feder 11 haben kann.

Durch die Anzahl der Ecken der Nut 12 wird gleichzeitig auch der minimale Verstellwinkel, um den die Platten 4, 41 in ihrer Lage zueinander veränderbar sind, festgelegt. Auch bei dieser Ausführungsform werden die Platten 4, 41 nach der Verstellung automatisch in ihrer Lage fixiert. Bei entsprechend elastisch federnd nachgebender Ausbildung der der Nut 12 benachbarten Plattenteile der Platte 4 kann eine Verdrehung der Platten 4, 41 zueinander erfolgen, ohne das die Feder 11 aus der Nut 12 entfernt werden muß. Um auch bei den Ausführungsformen nach den Fig, 24 und 26 eine formschlüssige Verbindung zwischen den Platten 4, 41 herzustellen, können die Federn 11 auch bei diesen Ausführungsformen mit Abflachungen 105 — wie mit strichlierten Linien angedeutet — versehen sein. Der zwischen diesen Abflachungen 105 und der Nut 12 gebildete Hohlraum kann dann wie in Verbindung mit Fig. 25 beschrieben durch einen Kunststoff78 ausgefüllt werden.

Im Rahmen der Erfindung ist es selbstverständlich möglich, jede der dargestellten und beschriebenen Ausführungsformen der Verbindungs- und bzw. Verstärkungsglieder also beispielsweise solche die in Verbindung mit den Seitenkanten 5, 6 beschrieben wurden auch für die Seitenkanten 7, 8 und umgekehrt zu verwenden und beliebig miteinander zu kombinieren. Gleichermaßen ist es unabhängig von der Ausbildung der Verbindungs- und bzw. oder Verstärkungsglieder möglich, diesen jede beliebige der dargestellten und beschriebenen Ausführungen von Quer- und bzw. oder Längsspanngliedern zuzuordnen. Auch ist es beispielsweise möglich im Bereich der Federn 11 und der Nut 12 Verstärkungsglieder 107 wie mit strich-zwei-punktierten Linien in Fig. 26 dargestellt zu verwenden. Diesen können in den der Nut 12 benachbarten Bereichen der Platten 4 bzw. 41 Verstärkungsglieder 108 zugeordnet sein, wobei die Verstärkungsglieder 107 und 108 der Platten 4, 41 mittels Verankerungsschrauben 50 miteinander verbunden werden um damit die ansich nachgiebigen Plattenteile beidseits der Nut 12 in ihrer Lage zur Feder 11 zu fixieren und ein Abheben derselben bei einer Sogwirkung zu verhindern.

In den Fig. 24 bis 26 sind dann auch noch weitere Ausführungs- und Anordnungsmöglichkeiten für Dichtungen 109, 110 die beispielsweise durch Hohlkammerdichtungen bzw. Lippendichtungen gebildet sind, dargestellt. Wie insbesondere aus der Darstellung in Fig. 25 ersichtlich, können bei entsprechender Anordnung derartiger durch Hohlkammerdichtungen gebildete Dichtungen 109 bei unterschiedlichen Winkelstellungen zwischen den Platten 4 bzw. 41 feuchtigkeitsdichte Abdichtungen erreicht werden. Gleiches trifft auf die Lippendichtungen der Dichtung 110 zu wenn die Lippen mit entsprechenden innenliegenden Metallverstärkungen oder dgl. versehen sind, die einem entsprechend hohem Unterdruck bei Sogwirkung standhalten. Diese Verstärkungen können dann wegfallen, wenn die Materialstärke bzw. Steifigkeit der verwendeten Materialien so hoch ist, daß die bezogen auf ihre Oberfläche auftretenden Sogkräfte ein Abheben der Dichtung nicht ermöglichen.

Desweiteren ist es im Rahmen der vorliegenden Erfindung auch möglich, daß das Querspannglied 15 — wie in Fig. I schematisch angedeutet — aus zwei Teilen 111, 112 besteht. Die von den Kupplungsteilen 16 abgewendeten Enden der Teile 111, 112 sind mit Verankerungsteilen 113 beispielsweise Gitternetzen, Widerhaken oder sonstigen meist flexilben flächenhaften Teilen verbunden durch die die Verankerung der einzelnen Teile 111, 112 der Querspannglieder 15 im Inneren der Platten 4, 41 sichergestellt werden sollen.

Weiters ist aus der Darstellung in Fig. 21 ersichtlich, daß eine Länge 114 der Längsspannglieder 87 größer ist als eine Länge 85 der einzelnen Platten 4, 41.

Nach einer weiteren Ausführungsvariante der vorliegenden Erfindung ist es aber auch möglich, daß wie in Fig. 17 schematisch angedeutet zwischen der Außenseite der Wand 33 des Speicherbehälters 1 und der Innenseiten der Platten 4, 41 gegebenenfalls vorhandene Zwischenräume 115 mit einem Schaumstoff beispielsweise einen Einkomponenten-Schaumstoff gefüllt werden. Dies erfolgt derart, daß nach dem Fertigstellen der Isolierung in diese Zwischenräume 114 der Kunststoff in flüssiger Form eingebracht wird, dort aufschäumt und dadurch die Zwischenräume 115 vollflächig füllt. Ein weiterer Vorteil dieser Lösung liegt darin, daß durch die beim Aufschäumen des Kunststoffs entstehende Volumsvergrößerung eine Schubkraft auf die Platten 4, 41 in Richtung der Querspannglieder 15, 44, 70, 86 ausgeübt wird, sodaß es zu einer Vorspannung dieser Querspannglieder kommt. Dadurch wird jegliches Spiel zwischen den Platten 4, 41 der Wand 33 und den Querspanngliedern 15 ausgeschaltet. Dadurch ist es auch nach einer längeren Einsatzdauer kaum möglich, daß sich die Platten 4, 41 lockern.

Wie weiters den Fig. 19 und 20 zu entnehmen ist, können die die Nut 12 begrenzenden Flanken verschieden lang sein, wobei die längere Flanke an der dem Speicherbehälter 1 abgewendeten und die kürzer Flanke an der diesem zugewandten Seite liegt. Desweiteren bilden die einander überdeckenden Profilteile 116, 117 der Profile 75, 76 Abdichtlippen, da die beiden Profilteile 75, 76 im Bereich ihrer Profilteile 117, 116 in Art eines Teleskop geführt sind. Diese Teleskopführung wird dadurch erreicht, daß die Profilteile 116, 117 koaxial zum Mantel der Feder 11 verlaufen.

Desweiteren ist es im Rahmen der Erfindung möglich, wie beispielsweise in den Fig. 12 und 13 gezeigt im Übergangsbereich zwischen zwei Platten beispielsweise in den zwischen der Nut 12 und der Außenseite der Platte verbleibenden Steg einen Schlitz 118 anzuordnen. Dieser Schlitz 118 kann durch Einlegen eines Kunststoffprofiles während des Schäumvorganges oder durch eine Ausfräsung gebildet sein.

Im Mittelbereich der Platten kann wie mit strichlierten Linien in Fig. 12 und 13 angedeutet ein Querkanal 119 vorgesehen sein, der den Schlitz 118 mit der Aussparung 42 verbindet. Dieser Schlitz 118 und der Querkanal 119 können dazu verwendet werden, um nach der Montage flüssige Dichtmittel einzubringen, die die während der Montage verbliebenen Hohlräume ausfüllen. Durch die Querkanäle 119 kann dieses flüssige Dichtmittel auch in die Aussparungen 42 eindringen und diese können zur Gänze gefüllt werden. Dies verhindert, daß in diesen Hohlräumen bei starken Temperaturunterschieden zwischen dem Speicherbehälter und der Umgebungsluft Kondenzwasser entsteht und sich in diesen Bereichen festsetzt.

Selbstverständlich kann anstelle der flüssigen Dichtmittel auch ein langsam aushärtender Kunststoffschaum oder eine andere Art von Vergußmasse eingebracht werden.

## Patentansprüche

1. Speicherbehälter (1) insebondere Großspeicher mit einer Isolierung, mit vorgeformten, aus Hartschaumkunstoff bestehenden Isolierkörpen, in Form von vorzugsweise außen mit einer metallischen Deckschicht z.B. aus Aluminium versehenen Platten (4, 41) die um den Speicherbehälter (1) zumindest bereichsweise an diesem anliegend herumgelegt und miteinander über profilierte Teile verbunden sind, dadurch gekennzeichnet, daß jede Platte zusätzlich zu den profilierten Teilen mit Verbindungs- und/oder Verstärkungsgliedern (20, 34, 43, 63, 69, 71, 72, 74, 88, 89, 101, 102, 107, 108) versehen ist und daß die Verstärkungsglieder (34, 74, 102, 108) im Bereich zweier einander gegenüberliegenden Seitenkanten (5, 6) einander unmittelbar benachbarter Platten (4) und einander überlappend sowie zusätzlich zur Deckschicht angeordnet sind und in dem einander überlappenden Bereich der Verstärkungsglieder (34, 74, 102, 108) diese über die Verbindungsglieder (37, 84, 78, 84, 101, 50) miteinander verbunden sind und/oder durch Längs- und/oder Querspannglieder (87; 15, 44, 70, 86) gebildet sind, welchen Kupplungsvorrichtungen (18) zugeordnet sind, die zwischen den in Richtung der Längs- und/oder Querspannglieder (87; 15, 44, 70, 86) voneinander abgewendeten Seitenkanten einer Platte vorgesehen sind und daß die Längs- und/oder Querspannglieder (87; 15, 44, 70, 86) und deren Kupplungsvorrichtungen zwischen der äußeren Deckschicht und dem Speicherbehälter angeordnet sind.

2. Speicherbehälter nach Anspruch 1, dadurch gekennzeichnet, daß die Verstärkungsglieder (34, 74, 102, 108) parallel zu den Seitenkanten (5, 6) der Platten (4) verlaufen.

3. Speicherbehälter nach Anspruch 1 oder 2, dadurch gekennzeichnet, daß dem Längs- und/oder Querspannglied (87; 15, 44, 70, 86) eine Spannvorrichtung (14) zugeordnet ist.

4. Speicherbehälter nach einem oder mehreren der Ansprüche 1 bis 3, dadurch gekennzeichnet, daß das Längs- und/oder Querspannglied (87; 15, 44, 70, 86) in einer Aussparung (42) der Platte (4, 41) angeordnet bzw. durch diese hindurchgeführt oder mit dieser wirkverbunden, insbesondere in diese eingeschäumt ist.

5. Speicherbehälter nach einem der Ansprüche 1 bis 4, dadurch gekennzeichnet, daß das Querspannglied (15, 44, 70, 86) in einer zu einer Längsachse (2) senkrechten Ebene um den Speicherbehälter (1) umlaufend angeordnet ist.

6. Speicherbehälter nach einem der Ansprüche 1 bis 5, dadurch gekennzeichnet, daß das Längsspannglied (87) in etwa parallel zur Längsachse (2) des Speicherbehälters (1) verlaufend angeordnet ist.

7. Speicherbehälter nach einem oder mehreren der Ansprüche 1 bis 6, dadurch gekennzeichnet, daß das Längsspannglied (87) im Überschneidungsbereich zumindest in radialer Richtung des Speicherbehälters (1) mit den Querspanngliedern (15, 44, 70, 86) bewegungsverbunden ist.

8. Speicherbehälter nach einem der Ansprüche 1 bis 7, dadurch gekennzeichnet, daß das Quer- und/oder Längsspannglied (15, 44, 70, 86; 87) z.B. durch ein Band oder Spannseil aus Metall oder Kunststoff gebildet ist und eine Länge (45, 114) aufweist, die größer ist als eine Abmessung einer durch zu diesen in etwa parallel verlaufende Seitenkante (5, 6, 7, 8) der Platte (4, 41) z.B. einer Breite (46) bzw. Länge (85) und daß vorzugsweise die beiden voneinander abgewendeten Enden derselben mit Kupplungsgliedern (16, 17) einer Kupplungsvorrichtung (18) versehen sind.

9. Speicherbehälter nach einem oder mehreren der Ansprüche 1 bis 8, dadurch gekennzeichnet, daß eine Länge des Querspanngliedes (15, 44, 70, 86) größer ist als ein Umfang des Speicherbehälters (1).

10. Speicherbehälter nach einem oder mehreren der Ansprüche 1 bis 9, dadurch gekennzeichnet, daß die einander gegenüberliegenden Enden der Längs- bzw. Querspannglieder (87; 15, 44, 70, 86) mit unterschiedlichen Kupplungsteilen (16, 17) z.B. Haken und Öse oder Verzahnungen (47, 57) der Kupplungsvorrichtung (18), versehen sind.

11. Speicherbehälter nach einem oder mehreren der Ansprüche 1 bis 10, dadurch gekennzeichnet, daß eine Länge (114, 45) des Längs- bzw. Querspanngliedes (87, 15, 44, 70, 86) in etwa einer doppelten Länge einer parallel zu diesen verlaufenden Seitenkante (5, 6, 7, 8) der Platte (4, 41) entspricht.

12. Speicherbehälter nach einem oder mehreren der Ansprüche 1 bis 11, dadurch gekennzeichnet, daß das Längs- bzw. Querspannglied (87, 15, 44, 70, 86) aus mehreren Teilen (111, 112) besteht.

13. Speicherbehälter nach einem oder mehreren der Ansprüche 1 bis 12, dadurch gekennzeichnet, daß das Längs- und/oder Querspannglied (87, 15, 44, 70, 86) in dem einer Platte (4, 41) zugewandten Längsbereich mit Verankerungsteilen (113) z.B. Gitterplatten, Profilteilen, Widerhaken oder dgl. bewegungsverbunden und mit diesen in die Platte (4, 41) eingeschäumt ist.

14. Speicherbehälter nach einem oder mehreren der Ansprüche 1 bis 13, dadurch gekennzeichnet, daß die von den Kupplungsteilen (16, 17) abgewendeten Enden der Teile (111, 112) der Längs- und/oder Querspannglieder (87; 15, 44, 70, 86) mit Verankerungsteilen bewegungsverbunden und mit diesen in die Platte (4, 41) eingeschäumt sind.

15. Speicherbehälter nach einem oder mehreren der Ansprüche 1 bis 14, dadurch gekennzeichnet, daß den Längs- bzw. Querspanngliedern (87; 15, 44, 70, 86) und/oder oder dessen Kupplungsteilen (16, 17) im Bereich der Seitenkanten (5, 6, 7, 8) bzw. der dem Speicherbehälter (1) zugewandten Innenfläche der Platten (4, 41) durch Halter gebildete Verbindungs- und/oder Verstärkungsglieder (71, 72) zugeordnet sind die vorzugsweise mit, in den Platten (4, 41) eingeschäumten Verankerungsteilen (114) verbunden sind.

16. Speicherbehälter nach einem oder mehreren der Ansprüche 1 bis 15, dadurch gekennzeichnet, daß in jeder Platte (4, 41) eine diese quer zu ihren die Längsschmalseiten bildenden Seitenkanten (5, 6) durchsetzende vorzugsweise eingeschäumte Aussparung (42), vorgesehen ist, die ein Längs- bzw. Querspannglied (87; 15, 44, 70, 86) aufnimmt.

17. Speicherbehälter nach einem der Ansprüche 1 bis 16, dadurch gekennzeichnet, daß bei in Längsrichtung gestaffelt zueinander versetzten Platten (4, 41) eine Aussparung (42) in Plattenmitte (35) und eine Ausnehmung (24, 51, 99) zwischen den profilierten Randteilen der Seitenkanten (7, 8) z.B. stufenartigen Abtreppungen wie ein Falz (22) oder Steg (54, 55) benachbarter Platten (4, 41) vorgesehen ist.

18. Speicherbehälter nach einem der Ansprüche 1 bis 17, dadurch gekennzeichnet, daß zur Bildung der Aussparung (42) ein in den Hartschaumstoff eingeschäumtes Profil Hohl- oder U-Profil vorzugsweise ein insbesondere metallisches Vierkantrohr, angeordnet ist.

19. Speicherbehälter nach einem der Ansprüche 1 bis 18, dadurch gekennzeichnet, daß Verzahnungen (47, 57) der Enden benachbarter Längs- bzw. Querspannglieder (87; 15, 44, 70, 86) durch eine bevorzugt ein selbstschneidendes Gewinde aufweisende Verankerungsschraube (50) oder dgl. miteinander verbunden sind.

20. Speicherbehälter nach einem der Ansprüche 1 bis 19, dadurch gekennzeichnet, daß an jedem Längs- bzw. Querspannglied (87; 15, 44, 70, 86) im Bereich einer der beiden Verzahnungen (47, 57) ein Langloch (48) und, im Abstand von diesem gegen die Mitte hin, mindestens eine Bohrung (49) zur Aufnahme einer Verankerungsschraube (50) vorgesehen ist.

21. Speicherbehälter nach einem der Ansprüche 1 bis 20, dadurch gekennzeichnet, daß im Abstand vom zu spannenden End- bzw. Kupplungsteil (16, 17) des Querspanngliedes (15, 44, 70, 86) eine Öffnung (58) in der Abtreppung z.B. dem Falz (22) bzw. dem Steg (54, 55) jeder Platte (4, 41) ausgebildet ist, um darin ein Spannwerkzeug, z.B. eine Spannzange (59) anzusetzen.

22. Speicherbehälter nach einem der Ansprüche 1 bis 21, dadurch gekennzeichnet, daß ein Verstärkungsglied (20, 34, 107, 108) an der stufenartigen Abtreppung bzw. dem Falz (22) oder Steg (54, 55) der oberen Seitenkante (8) jeder Platte (4, 41) vorgesehen ist, z.B. bestehend aus Sperrholz oder dgl. schraubbarem Werkstoff.

23. Speicherbehälter nach einem der Ansprüche 1 bis 22, dadurch gekennzeichnet, daß in an sich bekannter Weise die Isolierkörper als längliche Platten (4, 41) ausgebildet sind, und daß als Verbindungs- und/oder Verstärkungsglied eine Seitenkante (6) als profilierter Randteil mit wenigstens einer Nut (12) und eine andere Seitenkante mit wenigstens einem Verbindungsansatz z.B. einer Feder (11) versehen ist, wobei die Nut (12) und der Verbindungsansatz bzw. die Feder (11) formgleich ineinanderpassende Querschnitte aufweisen und zum Anschluß der Platten (4, 41) unter verschiedenen Winkeln zueinander die Querschnitte von Nut (12) und Verbindungsansatz bzw. Feder (11) kreisbogenförmig begrenzt sind, wobei eine Bogenlänge (64) des Querschnittes der Nut (12) größer als ein Halbkreisbogen ist und eine Bogenlänge (65) des Querschnittes des Verbindungsnasatzes bzw. der Feder (12) noch größer als jene des Querschnittes der Nut (12) ist.

24. Speicherbehälter nach Anspruch 23, dadurch gekennzeichnet, daß der normal zur Längsachse (2) des Speicherbehälters (1) geführte Querschnitt der Platten (4, 41) gekrümmt bzw. abgewinkelt verläuft.

25. Speicherbehälter nach Anspruch 23 oder 24, dadurch gekennzeichnet, daß, insbesondere bei im Freien aufgestellten Speicherbehälter (1), die an der Außenseite zwischen den Platten (4, 41) auftretenden Fugen mit einer Dichtmasse, z.B. aus Silikonkautschuk, ausgefüllt sind.

26. Speicherbehälter nach einem der Ansprüche 1 bis 25, dadurch gekennzeichnet, daß zwischen der Außenseite des Speicherbehälters (1) und der Innenseite der Platten (4, 41) gegebenenfalls vorhandene Zwischenräume (115) mit einem Schaumstoff, z.ß. Einkomponentenschaumstoff, ausgefüllt sind.

27. Speicherbehälter nach einem der Ansprüche 1 bis 26, dadurch gekennzeichnet, daß die durch die Nut (12) und den Verbindungs ansatz die Feder (12) gebildeten Verstärkungsglieder als vorgefertigte harte, vorzugsweise extrudierte und aus PVC gefertigte Profile (75, 76) ausgebildet sind.

28. Speicherbehälter nach Anspruch 27, dadurch gekennzeichnet, daß die Profile (75, 76) durch Anschäumen mit den Schaumkunststoffkörpern (61) der Platten (1) verbunden sind.

29. Speicherbehälter nach Anspruch 27 oder 28, dadurch gekennzeichnet, daß die Profile (75, 76) als Kastenprofile ausgebildet sind.

30. Speicherbehälter nach einem der Ansprüche 28 bis 29, dadurch gekennzeichnet, daß die die Nut (12) begrenzenden Flanken verschieden lang sind, wobei die längere Flanke an der dem Speicherbehälter (1) abgewandten und die kürzere Flanke an der ihm zugewandten Seite liegen.

31. Speicherbehälter nach einem der Ansprüche 23 bis 30, dadurch gekennzeichnet, daß an der vom Speicherbehälter (1) abgewandten Seite der Platte (4, 41) vorzugsweise koaxial zum Mantel der Feder (11) verlaufende Profilteile (116, 117) vorgesehen ist.

32. Speicherbehälter nach Anspruch 31, dadurch gekennzeichnet, daß die Profilteile (116, 117) an der Außenseite der längeren Flanke anliegen.

33. Speicherbehälter nach einem der Ansprüche 23 bis 32, dadurch gekennzeichnet, daß ein Teil der im wesentlichen zylindrischen Mantelfäche des Verbindungsansatzes bzw. der Feder (11) durch eine ebene, parallel zur Längsachse des Verbindungsansatzes verlaufenden Abflachung (105) gebildet ist.

34. Speicherbehälter nach Anspruch 33, dadurch gekennzeichnet, daß die Abflachung (105) seitlich in dem der kürzeren Flanke zugewandten Teil des Verbindungsansatzes bzw. der Feder (11) angeordnet ist.

35. Speicherbehälter nach einem der Ansprüche 1 bis 34 dadurch gekennzeichnet, daß in die Platten (4) quer zu ihren Längsschmalseiten liegende Verstärkungsglieder (20, 34) eingebettet, vorzugsweise eingeschäumt sind, die einends im Bereich der äußeren Längsbreitseite und andernends am zugehörigen von der äußeren Längsbreitseite der benachbarten Platte (41) überlappten Bereich enden, und daß die so überlappten Enden der Verstärkungsglieder (20, 34) der Platten (4, 41) von den Querspanngliedern (15, 44, 70, 86) und/oder anderen Verbindungsgliedern zusammengehalten, vorzugsweise durchsetzt sind.

36. Speicherbehälter nach einem der Ansprüche 1 bis 35, dadurch gekennzeichnet, daß die Verstärkungsglieder (26, 34) in der Plattenmitte (35) und an den Enden jeder länglichen Platte (4, 41) ausgebildet sind.

37. Speicherbehälter nach einem der Ansprüche 1 bis 36, dadurch gekennzeichnet, daß die Verstärkungsglieder (20, 34, 107, 108) aus lamellierten Schichtkörpern, z.B. Holzleisten, vorzugsweise Sperrholzleisten, bestehen.

38. Speicherbehälter nach einem der Ansprüche 1 bis 37, dadurch gekennzeichnet, daß Verbindungsglieder zwischen den Verstärkungsgliedern (2, 34, 107, 108) durch Nägel, Schrauben oder dgl. gebildet sind.

39. Verfahren zur Montage einer Isolierung für einen Speicherbehälter nach einem der Ansprüche 1 bis 38, dadurch gekennzeichnet, daß jede der in Längsrichtung gestaffelt zueinander zu verlegenden Platten (4, 41) mit eingesetztem Querspannglied (15, 44, 70, 86) zunächst mit einem Kupplungsteil (16) desselben an der benachbarten Platte (41) bzw. deren am Oberrand befindlichen Falz (10) verankert wird, z.ß. mit einer Verankerungsschraube (50) oder dgl. oder durch Eingriff in das benachbarte Querspannglied (15) mittels Haken, Spannschloß, Verzahnung (47, 57) oder dgl,. daß das Querspannglied der Platte (4, 41) sodann gespannt wird und in gespanntem Zustand mit seinem anderen Kupplungsteil (17) an der anderen benachbarten Platte (41) bzw. deren am Oberrand befindlichen Falz (10), festgelegt wird.

**Revendications**

1. Réservoir de stockage (1), en particulier gros réservoir d'emmagasinage, à corps isolants préfaçonnés consistant en matière synthétique mousse dure, sous la forme de plaques (4, 41) pourvues de préférence extérieurement d'une couche de recouvrement métallique par exemple en aluminium qui sont disposées autour du réservoir de stockage (1) en étant appliquées à celui-ci au moins par zones et reliées entre elles par l'intermédiaire d'éléments profilés, caractérisé en ce que chaque plaque est pourvue, en plus des éléments profilés, d'organes de liaison et/ou de renforcement (20, 34, 43, 63, 69, 71, 72, 74, 88, 89, 101, 102, 107, 108) et en ce que les organes de renforcement (34, 74, 102, 108) sont disposés au voisinage de deux bords latéraux (5, 6) de plaques (4) directement voisines mutuellement et de manière mutuellement recouvrante ainsi qu'additionnellement à la couche de recouvrement et, dans la région de recouvrement mutuel des organes de renforcement (34, 74, 102, 108), ceux-ci sont reliés par l'intermédiaire des organes de liaison (37, 84, 78, 84, 101, 50) et/ou sont constitués par des organes de serrage longitudinaux et/ou transversaux (87; 15, 44, 70, 86) auxquels sont associés des dispositifs d'accouplement (18) qui sont prévus entre les bords latéraux d'une plaque orientés à l'opposé l'un de l'autre en direction des organes de serrage longitudinaux et/ou transversaux (87; 15, 44, 70, 86) et en ce que les organes de serrage longitudinaux et/ou transversaux (87; 15, 44, 70, 86) et leurs dispositifs d'accouplement sont disposés entre la couche de recouvrement externe et le réservoir de stockage.

2. Réservoir de stockage selon la revendication 1, caractérisé en ce que les organes de renforcement (34, 74, 102, 108) s'étendent parallèlement aux bords latéraux (5, 6) des plaques (4).

3 Réservoir de stockage selon la revendication 1 ou 2, caractérisé en ce qu'à l'organe de serrage longitudinal et/ou transversal (87; 15, 44, 70, 86) est associé un dispositif de serrage (14).

4. Réservoir de stockage selon une ou plusieurs des revendications 1 à 3, caractérise en ce que l'organe de serrage longitudinal et/ou transversal (87; 15, 44, 70, 86) est disposé dans un évidement (42) de la plaque (4, 41) ou passe à travers celle-ci ou est relié à celle-ci de façon active, en particulier est incorporé à celle-ci par moussage.

5. Réservoir de stockage selon l'une des revendications 1 à 4, caractérisé en ce que l'organe de serrage transversal (15, 44, 70, 86) est disposé dans un plan perpendiculaire à l'axe longitudinal (2) en s'étendant autour d'u réservoir de stockage (1).

6. Réservoir de stockage selon l'une des revendications 1 à 5, caractérisé en ce que l'organe de serrage (87) est disposé en s'étendant sensiblement parallèlement à l'axe longitudinal (2) du réservoir de stockage (1).

7. Réservoir de stockage selon une ou plusieurs des revendications 1 à 6, caractérisé en ce que l'organe de serrage longitudinal (87) est relié en mouvement aux organes de serrage transversaux (15, 44, 70, 86) dans la zone d'intersection au moins en direction radiale du réservoir de stockage (1).

8. Réservoir de stockage selon l'une des revendications 1 à 7, caractérisé en ce que l'organe de serrage transversal et/ou longitudinal (15, 44, 70, 86; 87) est constitué par exemple par une bande ou un câble de serrage en métal ou en matière synthétique et présente une longueur (45, 114) qui est plus grande qu'une dimension d'un bord latéral (5, 6, 7, 8) de la plaque (4, 41) s'étendant sensiblement parallèlement à ceux-ci, par exemple d'une largeur (46) ou longueur (85) et en ce que, de préférence, les deux extrémités de celle-ci, orientées à l'opposé l'une de l'autre, sont pourvues d'organes d'accouplement (16, 17) d'un dispositif d'accouplement (18).

9. Réservoir de stockage selon une ou plusieurs des revendications 1 à 8, caractérisé en ce qu'une longueur de l'organe de serrage transversal (15, 44, 70, 86) est supérieure à un périmètre du réservoir de stockage (1).

10. Réservoir de stockage selon une ou plusieurs des revendications 1 à 9, caractérisé en ce que les extrémités, mutuellement en regard, des organes de serrage longitudinaux ou transversaux (87; 15, 44, 70, 86) sont pourvues d'éléments d'accouplement différents (16, 17) par exemple à crochet et oeillet ou denture (47, 57) du dispositif d'accouplement (18).

11. Réservoir de stockage selon une ou plusieurs des revendications 1 à 10, caractérisé en ce qu'une longueur (114, 45) de l'organe de serrage longitudinal ou transversal (87, 15, 44, 70, 86) correspond, en une longueur sensiblement double, à un bord latéral (5, 6, 7, 8), s'étendant parallèlement à ceux-ci, de la plaque (4, 41).

12. Réservoir de stockage selon une ou plusieurs des revendications 1 à 11, caractérisé en ce que l'organe de serrage longitudinal ou transversal (87, 15, 44, 70, 86) se compose de plusieurs parties (111, 112).

13. Réservoir de stockage selon une ou plusieurs des revendications 1 à 12, caractérisé en ce que l'organe de serrage longitudinal et/ou transversal (87; 15, 44, 70, 86) est lié en mouvement, dans la zone longitudinale orientée vers une plaque (4, 41), à des éléments d'ancrage (113), par exemple des plaques à grille, des éléments profilés, des contre-crochets ou analogues et est incorporé avec ceux-ci dans la plaque (4, 41) par moussage.

14. Réservoir de stockage selon une ou plusieurs des revendications 1 à 13, caractérisé en ce que les extrémités, orientées à l'opposé des éléments d'accouplement (16, 17), des éléments (111, 112) des organes de serrage longitudinaux et/ou transversaux (87; 15, 44, 70, 86) sont liées en mouvement à des éléments d'ancrage et incorporées avec ceux-ci dans la plaque (4, 41) par moussage.

15. Réservoir de stockage selon une ou plusieurs des revendications 1 à 14, caractérisé en ce qu'aux organes de serrage longitudinaux ou transversaux (87; 15, 44, 70, 86) et/ou à leurs éléments d'accouplement (16, 17) sont associés, au voisinage des bords latéraux (5, 6, 7, 8) ou de la surface intérieure des plaques (4, 41) orientée vers le réservoir de stockage (1), des organes de liaison et/ou de renforcement (71, 72) formés par des supports, qui sont de préférence reliés à des éléments d'ancrage (114) incorporés dans les plaques (4, 41) par moussage.

16. Réservoir de stockage selon une ou plusieurs des revendications 1 à 15, caractérisé en ce que dans chaque plaque (4, 41) est prévu un évidement (42) traversant celle-ci transversalement à ses bords latéraux (5, 6) formant les côtés longitudinaux étroits et de préférence incorporé par moussage, lequel reçoit un organe de serrage longitudinal ou transversal (87; 15, 44, 70, 86).

17. Réservoir de stockage selon l'une des revendications 1 à 16, caractérisé en ce que, dans le cas de plaques (4, 41) décalées mutuellement en direction longitudinale de façon échelonnée, sont prévus un évidement (42) dans le milieu de plaque (35) et un évidement (24, 51, 99) entre les portions marginales profilées des bords latéraux (7, 8), par exemple des gradins de forme étagée tels qu'une feuilure (22) ou barrette (54, 55) de plaques voisines (4, 41).

18. Réservoir de stockage selon l'une des revendications 1 à 17, caractérisé en ce que pour la formation de l'évidement (42) est agencé un profilé, profilé creux ou en forme de U, de préférence un tuyau carré en particulier métallique incorporé dans la matière mousse dure.

19. Réservoir de stockage selon l'une des revendications 1 à 18, caractérisé en ce que les dentures (47, 57) des extrémités d'organes de serrage longitudinaux ou transversaux voisins (87; 15, 44, 70, 86) sont reliées entre elles par une vis d'ancrage (50) ou analogue présentant de préférence un filetage autotaraudant.

20. Réservoir de stockage selon l'une des revendications 1 à 19, caractérisé en ce que sur chaque organe de serrage longitudinal ou transversal (87; 15, 44, 70, 86) au voisinage de l'une des deux dentures (47, 57) sont prévus un trou oblong (48) et, à une certaine distance de celui-ci en direction du centre, au moins un perçage (49) pour la réception d'une vis d'ancrage (50).

21. Réservoir de stockage selon l'une des revendications 1 à 20, caractérisé en ce qu'à une certaine distance de l'élément extrême ou d'accouplement (16, 17), à serrer, de l'organe de serrage transversal (15, 44, 70, 86), un orifice (58) est formé dans le gradin, par exemple dans la feuillure (22) ou la barrette (54, 55) de chaque plaque (4, 41) pour y appliquer un outil de serrage, par exemple une pince de serrage (59).

22. Réservoir de stockage selon une des revendications 1 à 21, caractérisé en ce qu'un organe de renforcement (20, 34, 107, 108) est prévu sur le gradin étagé ou sur la feuillure (22) ou la barrette (54, 55) du bord latéral supérieur (8) de chaque plaque (4, 41) et consiste par exemple en bois contreplaqué ou en une matière analogue vissable.

23. Réservoir de stockage selon l'une des revendications 1 à 22, caractérisé en ce que, d'une façon connue en soi, les corps isolants sont réalisés sous forme de plaques allongées (4, 41) et en ce que, comme organe de liaison et/ou de renforcement, un bord latéral (6) sous forme de partie marginale profilée est pourvu d'au moins une rainure (12) et un autre bord latéral est pourvu d'au moins un appendice de liaison, par exemple d'une languette (11), la rainure (12) et l'appendice de liaison ou la languette (11) présentant des sections transversales de forme identique s'adaptant l'une dans l'autre et, pour le raccordement des plaques (4, 41) sous différents angles l'une par rapport à l'autre, les sections transversales de la rainure (12) et de l'appendice de liaison ou de la languette (11) sont délimitées selon une forme en arc de circonférence, une longueur d'arc (64) de la section transversale de la rainure (12) étant plus grande qu'un arc de demi-cercle et une longueur d'arc (65) de la section transversale de l'appendice de liaison ou de la languette (12) est encore plus grande que celle de la section transversale de la rainure (12).

24. Réservoir de stockage selon la revendication 23, caractérisé en ce que la section transversale des plaques (4, 41), orientée normalement à l'axe longitudinal (2) du réservoir de stockage (1), s'étend de façon courbée ou coudée.

25. Réservoir de stockage selon la revendication 23 ou 24, caractérisé en ce qu'en particulier dans le cas d'un réservoir de stockage (1) érigé à l'air libre, les interstices, apparaissant sur la face extérieure entre les plaques (4, 41), sont remplis d'une masse de joint d'étanchéité, par exemple en caoutchouc silicone.

26. Réservoir de stockage selon l'une des revendications 1 à 25, caractérisé en ce qu'entre la face extérieure du réservoir de stockage (1) et la face intérieure des plaques (4, 41), des intervalles (115) éventuellement présents sont remplis d'une matière mousse, par exemple d'une matière mousse à monocomposant.

27. Réservoir de stockage selon l'une des revendications 1 à 26, caractérisé en ce que les organes de renforcement, formés par la rainure (12) et l'appendice de liaison ou la languette (12), sont réalisés sous forme de profilés (75, 76) durs, de préférence extrudés et fabriqués en poly(chlorure de vinyle).

28. Réservoir de stockage selon la revendication 27, caractérisé en ce que les profilés (75, 76) sont reliés aux corps en matière synthétique mousse (61) des plaques (1) par moussage moulant.

29. Réservoir de stockage selon la revendication 27 ou 28 caractérisé en ce que les profilés (75, 76) sont réalisés sous forme de profilés en caisson.

30. Réservoir de stockage selon l'une des revendications 28 à 29, caractérisé en ce que les flancs, délimitant la rainure (12), sont différemment longs, le flanc plus long étant situé sur le côté orienté à l'opposé du réservoir de stockage (1) et le flanc plus court étant situé sur le côté orienté vers celui-ci.

31. Réservoir de stockage selon l'une des revendications 23 à 30, caractérisé en ce que sur le côté de la plaque (4, 41) orienté à l'opposé du réservoir de stockage (1), sont prévus des éléments profilés (116, 117) s'étendant de préférence coaxialement à la surface latérale de la languette (11).

32. Réservoir de stockage selon la revendication 31, caractérisé en ce que les éléments profilés (116, 117) sont appliqués contre la face externe du flanc plus long.

33. Réservoir de stockage selon l'une des revendications 28 à 32, caractérisé en ce qu'une portion de la surface latérale sensiblement cylindrique de l'appendice de liaison ou de la languette (11) est formée par un méplat (105) plan, s'étendant parallèlement à l'axe longitudinal de l'appendice de liaison.

34. Réservoir de stockage selon la revendication 33, caractérisé en ce que e méplat (105) est disposé latéralement dans la partie de l'appendice de liaison ou de la feuillure (11), orientée vers le flanc plus court.

35. Réservoir de stockage selon l'une es revendications 1 à 34, caractérisé en ce que des organes de renforcement (20, 34) sont noyés, de préférence incorporés par moussage dans les plaques (4) en étant situés transversalement à leurs côtés étroits longitudinaux, qui se terminent à une extrémité au voisinage du côté large longitudinal externe et à l'autre extrémité dans la zone associée, recouverte par le côté large longitudinal de la plaque voisine (41) et en ce que les extrémités ainsi en recouvrement des organes de renforcement (20, 34) des plaques (4, 41) sont maintenues assemblées, de préférence traversées par des organes de serrage transversaux (15, 44, 70, 86) et/ou par d'autres organes de liaison.

36. Réservoir de stockage selon l'une des revendications 1 à 35, caractérisé en ce que les organes de renforcement (26, 34) sont réalisés dans le milieu de plaque (35) et aux extrémités de chaque plaque allongée (44, 1).

37. Réservoir de stockage selon l'une des revendications 1 à 36, caractérisé en ce que les organes de renforcement (20, 34, 107, 108) se composent de corps stratifiés lamellés, par exemple de liteaux en bois, de préférence de liteaux en bois contreplaqué.

38. Réservoir de stockage selon l'une des revendications 1 à 37, caractérisé en ce que les organes de liaison, entre les organes de renforcement (2, 34, 107, 108), sont constitués par des clous, des vis ou analogues.

39. Procédé de montage d'une isolation pour un réservoir de stockage selon l'une des revendications 1 à 38, caractérisé en ce que chacune des plaques (4, 41), à poser de façon mutuellement échelonnée en direction longitudinale et à organe de serrage transversal incorporé (15, 44, 70, 86), est d'abord ancrée par un élément d'accouplement (16) de celui-ci sur la plaque voisine (41) ou sur la feuillure (10) se trouvant au bord supérieur de celle-ci, par exemple par une vis d'ancrage (50) ou analogue ou par accrochage dans l'organe de serrage transversal voisin (15) au moyen d'un crochet, d'un manchon-ridoir de serrage, d'une denture (47, 57) ou analogue, en ce que l'organe de serrage transversal de la plaque (41) est ensuite tendu et fixé par son autre élément d'accouplement (17) à l'autre plaque voisine (41) ou à sa feuillure (10) se trouvant au bord supérieur.

**Claims**

1. Storage container (1), in particular large storage units, comprising an insulation with preshaped insulating elements consisting of hard expanded plastics material, in the form of panels (4, 41) which are preferably provided externally with a metal covering layer, e.g. of aluminium, which are installed around the storage container (1) in at least some areas in contact with the same and are joined to each other via contoured parts, characterised in, that each panel (4, 41) is provided with connecting and/or reinforcing member (20, 34, 43, 63, 69, 71, 72, 74, 88, 89, 101, 102, 107, 108) additional to the contoured parts and that the reinforcing member (34, 74, 102, 108) are arranged in the area of lateral edges (5, 6) facing each other of two immediately adjacent panels (4) additional to the covering layer and overlapping each other and wherein the reinforcing members (34, 74, 102, 108) are connected with each other over the connecting members (37, 84, 78, 84, 101, 50) in the area of overlap and/or are formed by longitudinal and/or transverse tensioning members (87; 15, 44, 70, 86) whom are allocated coupling devices (18) which are arranged between the lateral edges of a plate with face away from each other in the direction of the longitudinal and/or transverse tensioning members (87; 15, 44, 70, 86) and that the longitudinal and/or transverse tensioning members (87; 15, 44, 70, 86) and there coupling members (87; 15, 44, 70, 86) and there coupling devices are arranged between the externally covering layer and the storage container.

2. Storage container according to claim 1, characterised in that the reinforcing members (34, 74, 102, 108) exstend parallel to the lateral edges (5, 6) of the panels (4).

3. Storage container according to claim 1 or 2, characterised in that a tensioning device (14) is allocated to a longitudinal and/or transverse tensioning member (87; 15, 44, 70, 86).

4. Insulation according to one or more of the claims 1 to 3, characterised in that the longitudinal and/or transverse tensioning member (87; 15, 44, 70, 86) is installed or passed through an excision (42, 51) of the panel (4, 41) or is effectively joined to the same, and in particular inset therein during expansion.

5. Insulation according to one of the claims 1 to 4, characterised in that the transverse tensioning member (15, 44, 70, 86), is rotatably installed around the storage container (1) is a plane at right angles to a longitudinal axis (2).

6. Insulation according to one of the claims 1 to 5, characterised in that the longitudinal tensioning member (87) is arranged to extend approximately parallel to the longitudinal axis (2) of the storage container (1).

7 Insulation according to one or more of the claims 1 to 6, characterised in that the longitudinal tensioning member (87) is coupled in motion in at least radial direction of the storage container (1) with the transverse tensioning members (15, 44, 70, 86), in the area of overlap.

8. Insulation according to one of the claims 1 to 7, characterised in that the transverse and/or longitudinal tensioning member (15, 44, 70, 86; 87) is formed by a strip or tensioning cable of metal or plastics material for example, and has a length (45, 114) which is greater than a dimension of a lateral edge (5, 6, 7, 8) of the panel (4, 41), said edge extending approximately parallel to the same, e.g. being a width (46) or length (85) and that the two extremities of the same with face away from each other are provided with coupling members (16, 17) of a coupling device (18).

9. Insulation according to one or more of the claims 1 to 8, characterised in that a length of the transverse tensioning member (15, 44, 70, 86) is greater than a circumference of the storage container (1).

10. Insulation according to one or more of the claims 1 to g, characterised in that the extremities facing each other of the longitudinal and transverse tensioning members (87; 15, 44, 70, 86) are provided with different coupling members (16, 17), hooks and eyes, or denticulations (47, 57) of the coupling device (18).

11. Insulation according to one or more of the claims 1 to 10, characterised in that a length (114, 45) of the longitudinal or transverse tensioning member (87, 15, 44, 70, 86) corresponds approximately to twice the length of a lateral edge (5, 6, 7, 8) of the panel (4, 41), said edge extending parallel to the same.

12. Insulation according to one or more of the claims 1 to 11, characterised in that the longitudinal and transverse tensioning member, respectively, (87, 15, 44, 70, 86) comprises several parts (111, 112).

13. Insulation according to one or more of the claims 1 to 12, characterised in that the longitudinal and/or transverse tensioning member (87; 15, 44, 70, 86) has anchoring elements (113), e.g. mesh panels, contoured elements, mating hooks or the like, coupled with it in motion and is installed through these in the panel (4, 41) during its expansion.

14. Insulation according to one or more of the claims 1 to 13, characterised in that the extremities of the parts (111, 112) of the longitudinal and/or transverse tensioning members (87; 15, 44, 70, 86) which face away from the coupling elements (16, 17) are coupled in motion with anchoring elements and are installed through these in the panel (4, 41) during its expansion.

15. Insulation according to one or more of the claims 1 to 14, characterised in that the longitudinal and transverse tensioning members (87; 15, 44, 70, 86) and/or their coupling elements (16, 17) have coupling and/or reinforcing members (71, 72) which are preferably connected to anchoring elements (114) installed in the panels (4, 41) during their expansion, allocated to them in the area of the lateral edges (5, 6, 7, 8) or of the inner surface of the panels (4, 41) facing towards the storage container (1), said anchoring elements being formed by brackets or the like.

16. Insulation according to one or more of the claims 1 to 15, characterised in that a perforation (42) which receives a longitudinal or transverse tensioning member (87; 15, 44, 70, 86) is provided in each panel (4, 41) which it traverses transversely to its lateral edges (5, 6) forming the narrow longitudinal sides and preferably formed therein during expansion.

17. Insulation according to one of the claims 1 to 16, characterised in that in the case of panels (4, 41) offset with respect to each other in echelon pattern in longitudinal direction, a void (42) is situated at the centre of the panel (35) and a recess (24, 51, 99) is provided between the contoured marginal portions of the lateral edges (7, 8), e.g. step-like rebates such as a recess (22) and web (54, 55) of adjacent panels (4, 41).

18. Insulation according to one of the claims 1 to 17, characterised in that a section, hollow or U-shaped section, preferably being a square section tube, in particular of metal, which is installed in the hard expanded material during its expansion, is incorporated to from the void (42).

19. Insulation according to one of the claims 1 to 18, characterised in that denticulations (47, 57) of the extremities of adjacent longitudinal and transverse tensioning members (87; 15, 44, 70, 86) are interconnected by means of an anchoring screw (50) or the like, which preferably has a self-tapping screw-thread.

20. Insulation according to one of the claims 1 to 19, characterised in that a slot (48) is provided in the area of one of the two denticulations (47, 57) in each longitudinal and transverse tensioning member (87; 15, 44, 70, 86), and that at least one bore (49) for reception of an anchoring screw (50) is provided towards the centre at a distance from said slot.

21. Insulation according to one of the claims 1 to 20, characterised in that an opening (58) in the step, e.g. the recess (22) or the web (54, 55) of each panel (4, 41) is formed in the same at a distance from the terminal and coupling element (16, 17) of the transverse tensioning element (15, 44, 70, 86), so that a tightening tool, e.g. pliers (59), may be applied therein.

22. Insulation according to one of the claims 1 to 21, characterised in that a reinforcing member (20, 34, 107, 108) is provided at the step-like rebate or recess (22) or web (54, 55) of the upper lasteral edge (8) of each panel (4, 41), e.g. consisting of plywood or similar screwable material.

23. Insulation according to one of the claims 1 to 22, characterised in that the insulating elements are formed in a manner known per se as elongated panels (4, 41), and that to form a connecting and/or reforcing member, one lateral edge (6) being formed as a contoured marginal portion with at least one groove (12) and another lateral edge is provided with at least one connecting extension, e.g. a tongue (11), the groove (12) and the connecting extension or rather tongue (11) having cross-sections of mutually fitting forms, and for the purpose of connecting the panels (4, 41) under different angles to each other, the cross-sections of the groove (12) or cavity and of the coupling extension or tongue (11) are arcuately delimited, an arc length (64) of the cross-section of the groove (12) being greater than a semicircular arc and an arc length (65) of the cross-section of the coupling extension or tongue (12) being still greater than that of the cross-section of the groove (12).

24. Insulation according to claim 23, characterised in that the cross-section of the panels (4, 41) taken perpendicularly to the longitudinal axis (2) of the storage container (1) extends curvedly or angularly.

25. Insulation according to claim 23 or 24, characterised in that in particular in the case of a storage container (1) erected outdoors, the gaps appearing at the outer side between the panels (4, 41) are filled with a sealing composition, e.g. of silicone rubber.

26. Insulation according to one of the claims 1 to 25, characterised in that interstices (115) which may possibly be present between the outer side of the storage container (1) and the inner side of the panels (4, 41) are filled with an expanded material, e.g. single-component expanded material.

27. Insulation according to one of the claims 1 to 26, characterised in that the reinforcing elements formed by the groove (12) and the coupling extension or tongue (12) are produced as hard prefabricated sections (75, 76) which are preferably extruded and made of PVC.

28. Insulation according to claim 27, characterised in that the sections (75, 76) are joined to the expanded plastics material elements (61) of the panels (1) by co-expansion.

29. Insulation according to claim 27 or 28, characterised in that the sections (75, 76) are constructed as box sections.

30. Insulation according to one of the claims 28 to 29, characterised in that the flanks delimiting the groove (12) are of different lengths, the longer flank being situated at the side facing away from the storage container (1) and the short flank at the side facing towards the same.

31. Insulation according to one of the claims 23 to 30, characterised in that sectional elements (116, 117) preferably extending co-axially to the surface of the tongue (11) are situated at the side of the panel (4, 41) facing away from the storage container (1).

32. Insulation according to claim 31, characterised in that the sectional elements (116, 117) are in contact on the outer side of the longer flank.

33. Insulation according to one of the claims 23 to 32, characterised in that a part of the substantially cylindrical envelope surface of the coupling extension or tongue (11) is formed by a plane flattened portion (105) extending parallel to the longitudinal axis of the coupling extension.

34. Insulation according to claim 33, characterised in that the flat portion (105) is laterally situated in the part of the coupling extension or tongue (11) facing towards the shorter flank.

35. Insulation according to one of the claims 1 to 34, characterised in that reinforcing members (20, 34) extending transversely to the narrow longitudinal sides of the panels (4) are imbedded therein, preferably during expansion, said reinforcing members terminating at one extremity in the area of the outer longitudinal wide side and at the other extremity at the corresponding area overlapped by the outer longitudinal wide side of the adjacent panel (41), and that the so overlapped extremities of the reinforcing members (20, 34) of the panels (4, 41) are held together and preferably transpierced by the transverse tensioning elements (15, 44, 70, 86) and/or other connecting members.

36. Insulation according to one of the claims 1 to 35, characterised in that the reinforcing members (26, 34) are formed at the panel centre (35) and at the extremities of each elongated panel (4, 41).

37. Insulation according to one of the claims 1 to 36, characterised in that the reinforcing members (20, 34, 107, 108) consist of laminated stratified elements, e.g. wooden fillets, and preferably plywood fillets, batens or the like.

38. Insulation according to one of the claims 1 to 37, characterised in that connecting members between the reinforcing members (2, 34, 107, 108) are formed by nails, screws or the like.

39. Method of installing an insulation according to one of the claims 1 to 38, characterised in that each of the panels (4, 41) which are to be laid mutually staggered in longitudinal direction, is initially anchored via a coupling element (16) of an inserted transverse tensioning element (15, 44, 70, 86) on the adjacent panel (41) or on its rebate (10) situated at the top edge, e.g. by means of an anchoring screw (50) or the like, or by engagement in the adjacent transverse tensioning element (15) by means of hooks, tie rods, denticulations (47, 57) or the like, that the transverse tensioning element of the panel (4, 41) is then tensioned and while it is in the tensioned condition, its other coupling element (17) is immobilised on the other adjacent panel (41) or rather on its rebate or step (10) present at the top edge.

**Fig. 1**

**Fig. 2**

**Fig. 3**

# Fig. 4

# Fig. 5

Fig. 6

Fig. 7

Fig. 8

Fig. 9

Fig. 10

Fig. 11

4

Fig. 12

Fig. 15

Fig. 13

Fig. 14

Fig. 16

EP 0 334 850 B1

Fig. 17

Fig. 18

Fig. 19

Fig. 20

EP 0 334 850 B1

Fig. 21

Fig.22

Fig. 23

Fig. 24

Fig. 25

Fig. 26